Europäisches Patentamt

European Patent Office

Office européen des brevets

(11) Publication number: 0 564 868 A2

# EUROPEAN PATENT APPLICATION

(21) Application number: 93104445.7

(22) Date of filing: 18.03.93

(51) Int. Cl.⁵: H04N 1/40

(30) Priority: 06.04.92 JP 84129/92
07.04.92 JP 85476/92
10.04.92 JP 90680/92

(43) Date of publication of application:
13.10.93 Bulletin 93/41

(84) Designated Contracting States:
DE FR GB IT NL

(71) Applicant: KONICA CORPORATION
26-2, Nishi-shinjuku 1-chome
Shinjuku-ku
Tokyo(JP)

(72) Inventor: Yamamoto, Hiroyuki

2970 Ishikawa-cho
Hachioji-shi, Tokyo(JP)
Inventor: Haneda, Satoshi
2970 Ishikwa-cho
Hachioji-shi, Tokyo(JP)
Inventor: Ichihara, Yoshiyuki
2970 Ishikawa-cho
Hachioji-shi, Tokyo(JP)
Inventor: Sawada, Kouichi
2970 Ishikawa-cho
Hachioji-shi, Tokyo(JP)

(74) Representative: Türk, Gille, Hrabal, Leifert
Brucknerstrasse 20
D-40593 Düsseldorf (DE)

(54) Image forming apparatus.

(57) An image forming apparatus in which a pulse width modulation signal is generated in accordance with the density data of an image and the image is recorded by the pulse width modulation signal, wherein a pulse position of the pulse width modulation signal is displaced corresponding to the density distribution in an objective pixel found from the density of the objective pixel and that of the adjacent pixel. The modulator to generate the pulse width modulation signal and to displace the pulse position corresponding to the density distribution in the objective pixel includes a pulse starting and ending data generating circuit, one or more programmable delay generators, and a D-type flip-flop.

FIG. 1

## BACKGROUND OF THE INVENTION

The present invention relates to an image forming apparatus by which images of high quality can be recorded when the distribution of adjacent pixels is reflected by the distribution of density of objective recording pixels. The present invention relates to a color image forming apparatus in which color images are formed in the following manner: image data corresponding to one pixel is divided into small pixels of m × n (width × length) giving consideration to the adjacent pixel data; the center of gravity of each line is found; a pulse width modulation signal is generated in which the recording position is displaced in accordance with the gravity; and according to the modulation signal, dot-recording composed of small scanning lines, the number of which is "n", is carried out, so that characters and half-tone images are reproduced. In this case, the recording apparatus is used for a printer and a display device.

In the field of an image forming apparatus based on electrophotography, an image on an original is read as image signals by a scanner, and the image signals are subjected to gradation correction, A/D conversion and shading correction to be image density data. The image density data are modulated by reference wave signals so that digital images having therein reproduced half-tone images may be obtained.

With regard to image signals obtained by reading an image on an original document with a scanner, an edge portion of the image is read as a half-tone image density due to an aperture of a solid image sensor incorporated in the scanner. When image density data obtained from the image signals make a latent image on a photoreceptor, recording pixels corresponding to edges of the latent image are recorded as an average within recording pixels when density is medium. Therefore, sharpness of the image is deteriorated for recording. For this problem, there have been known MTF correction methods wherein a differential filter or a Laplacian filter is used for image signals for sharpening images. In these methods, however, only edge portions of an image are sharpened and uniformity of half-tone images is relatively deteriorated.

Even when interpolation characters or graphics are formed by CG or font data, on the other hand, the same problem still occurs. That is, when interpolation data interpolate edge portions smoothly by means of medium density, recording pixels corresponding to the edge portions are recorded with the average density. Therefore, the sharpness of recorded images is deteriorated.

For the above reason, medium density processing that works effectively on the edge portions of an image is required. There is a method in which a triangular wave, the phase of which is shifted, is used for a reference wave. However, according to the aforementioned method, the adjacent pixels are affected, and further a plurality of reference waves must be prepared. Therefore, it is necessary to change over the reference waves. As a result, a complicated circuit must be provided, so that the cost is raised. The aforementioned method has the above various problems.

Also, the present invention relates to an image forming apparatus, and more particularly relates to a laser beam image forming apparatus in which the laser beam source is driven by a pulse width signal (PWM signal) corresponding to image data so as to reproduce the gradation of the image.

A pulse width modulation circuit to generate a pulse width signal having information about gradation includes a D/A converter that converts a digital image signal into an analog signal, a pattern generating circuit that receives an analog signal and generates a predetermined pattern corresponding to the analog signal, and an analog circuit such as a comparator that receives the generated pattern and generates a PWM pulse.

The pulse width modulation circuit that generates pulse width signals having gradation information includes analog circuit components, which are attached onto the system board as discrete parts. Therefore, the analog circuit components tend to be affected by noises emitted from the circuits disposed around them, so that accuracy can not be maintained stably.

Further, the present invention relates to an image forming apparatus, and more particularly relates to an image forming apparatus that generates a PWM signal (a pulse width modulation signal) in accordance with the image density data and controls the light emitting time of the light source by the PWM signal so as to reproduce the gradation.

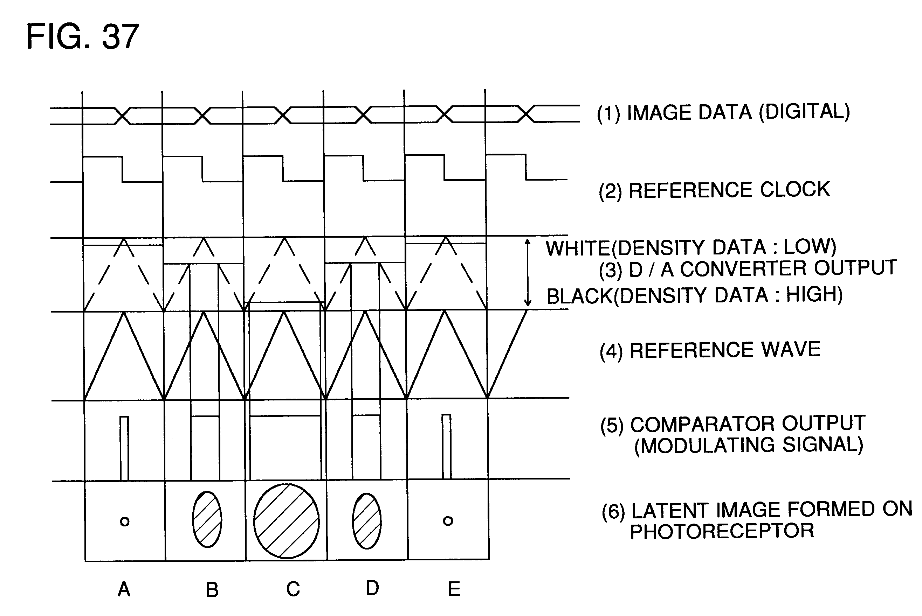

Fig. 37 is a schematic illustration for explaining a gradation reproduction system in which PWM signals are employed. In the case of a digital color copier, obtained image data (image data (1) in Fig. 37) is temporarily written in the frame memory, and the image data is read out by a reference clock (a reference clock (2) in Fig. 37) corresponding to one pixel. The image data that has been read out is converted into an analog signal by a D/A converter (D/A output (3) in Fig. 37 is obtained), and the converted analog signal is compared with a triangular wave (the reference wave (4) in Fig. 37) having a period corresponding to one pixel by a comparator, so that a PWM signal (comparator output (5) in Fig. 37) is generated. Light emitting time of the light source (a semiconductor laser and so forth) is controlled by this PWM signal, and an electrostatic latent image is formed on a photoreceptor (latent images (6) A, B, C, D and E formed on the photoreceptor in Fig. 37).

In order to form a highly defined image by the gradation reproduction system (shown in Fig. 37) in which PWM signals are used, the following problems are caused.

(1) In the case where an image signal has been obtained by scanning a document image with a scanner, a signal of the edge of the image (that is, the boundary between high and low density regions) is read as intermediate density due to the aperture of a solid image sensor assembled into the scanner. In the case where this image signal is modulated by a reference wave (a triangular wave having a peak in the center of one pixel, the period of which corresponds to one pixel) so as to generate a PWM signal to form a latent image, the latent image corresponding to the edge is formed in a small size approximately in the center of the recording pixel region (latent images A and E in the edge shown in Fig. 37). That is, the latent image corresponding to the edge is formed separately from the latent image of the main image (latent images B, C and D shown in Fig. 37). Therefore, white spots are caused and the sharpness of the image is lowered.

(2) In the case where an image is reproduced such as a photographic image, the density level of which fluctuates little, the image quality can be improved in the case where one PWM signal is generated over a plurality of pixels so as to obtain an image of high gradation even though the resolution is lowered, compared with a case where a PWM signal is generated for each pixel. When the aforementioned process is carried out, image quality of high gradation can be improved in a portion of the photographic image where image density fluctuates little. However, in a region where the image density fluctuates greatly (for example, in the edge portion of a photographic image where image density is greatly varied), the sharpness of the image is deteriorated because the resolution is lowered. That is, the characteristics of the entire image to be reproduced are not compatible with the sharpness of the edge portion.

## SUMMARY OF THE INVENTION

The first object of the present invention is to provide an image forming apparatus capable of recording an image of high quality using a simple circuit when the resolution of the image determined by a scanner, CG or font data is improved.

The second object of the present invention is to improve the anti-noise characteristics and accuracy of image processing (PWM pulse generation processing for reproducing the gradation) in which a PWM circuit is used.

The third object of the present invention is to accomplish compatibility of an improvement in image quality and that in sharpness of an edge portion using a simple structure.

The first embodiment of the present invention to accomplish the aforementioned object is to provide an image forming apparatus in which a pulse width modulation signal is generated in accordance with the density data of an image and the image is recorded by the pulse width modulation signal, wherein a pulse position of the pulse width modulation signal is displaced corresponding to the density distribution in an objective pixel found from the density of the objective pixel and that of the adjacent pixel.

The modulation means to generate the pulse width modulation signal and to displace the pulse position corresponding to the density distribution in the objective pixel preferably includes a pulse start and end data generating circuit, one or more programmable delay generators, and a D-type flip-flop.

A typical embodiment of the present invention will be summarized as follows:

A pulse generation means is triggered by an image data transmission clock so that the output level is inverted. At the same time, the image data is inputted into a digital programmable delay generation circuit, so that a pulse having a delay amount corresponding to the image data is generated.

A pulse generation means is reset by this delay pulse, so that a PWM pulse is generated.

In the case where a photographic image is processed, image processing is not conducted for each pixel, but one gradation signal is generated when pieces of information of a plurality of pixels are averaged. In order to make it possible to use the system of the digital programmable delay generation circuit even in the aforementioned case, a changeover means is provided that changes over the maximum delay ranges of a frequency demultiplying circuit, image data averaging circuit and digital programmable delay generation circuit.

The digital programmable delay circuit (IC circuit) converts image data into delay information, and a PWM pulse is generated in accordance with this delay information. Therefore, it is not necessary to provide an analog circuit outside and an analog delay line. Accordingly, the apparatus is hardly subjected to noises emitted by the surrounding circuits. Further, the digital programmable delay circuit composed IC components can be easily operated, and also the number of bits of input and output data can be easily extended, so that it is appropriate to improve the accuracy.

In the case where data processing over a plurality of pixels is required, for example, in the case where a photographic image is copied, the path of an image transmission clock and that of image data can be automatically changed over when the printing period is changed, so that processing can be carried out in accordance with an image to be reproduced.

Further, with respect to an image, the density level of which fluctuates greatly (that is, with respect to a character image), image processing is carried out for each pixel so that a PWM signal corresponding to each pixel is generated and the image is recorded. With respect to an image, the density level of which fluctuates little (that is, with respect to a photographic image), image processing is carried out over not less than 2 pixels so that one PWM signal is generated and the image is recorded. With respect to an edge portion (a portion in which the density is clearly changed), the recording position is corrected (recording position modulation) with respect to both images.

In order to realize the function, the PWM signal is generated using the first reference wave having a period corresponding to each pixel, the second reference wave having a period twice as long as that of the first reference wave, and the third reference wave having a phasic difference of 180° with respect to the phase of the second reference wave, and the level of the image signal that has passed through the A/D converter is compared with that of the reference wave.

Image reproduction of high resolution is carried out by the image processing for each pixel with respect to an image, the density level of which fluctuates greatly. Image reproduction of high gradation is carried out by the image processing over not less than 2 pixels with respect to an image, the density level of which fluctuates little. Further, the sharpness of the edge portion is ensured by carrying out uniform recording position modulation. That is, image reproduction processing is finely conducted, giving consideration to the characteristics of the entire image to be reproduced and the local change of image density. In this way, the image quality can be improved.

In the generating section of PWM signals to reproduce the gradation, the essential operation is to compare an image signal with a reference wave. Further, one of the second and third reference waves is used for recording position modulation, and also used for processing over not less than 2 pixels when a photographic image is processed, so that the reference wave can be effectively used. In this manner, the structure is simplified.

## BRIEF DESCRIPTION OF THE DRAWINGS

Further aspects and features of the present invention will become apparent after considering the attached drawings in which:

Fig. 1 is a block diagram of an image processing circuit of an example of the image forming apparatus of the present invention;

Fig. 2 is a block diagram showing an example of the modulation circuit shown in Fig. 1;

Fig. 3(a) is a flow chart showing a calculation in the pulse start and end data generating circuit shown in Fig. 2;

Fig. 3(b) is a view showing a relationship between the data;

Fig. 4(a) - 4(h) are time charts when a writing pulse is generated;

Fig. 5 is a block diagram showing an example of the RE processing circuit in Fig. 1;

Fig. 6 is a schematic illustration showing a model of pixels recorded by the apparatus of the present invention;

Fig. 7 is a perspective view briefly showing the structure of the image forming apparatus of the present invention;

Fig. 8 is a view showing the semiconductor laser array of the example shown in Fig. 7;

Fig. 9 is a view showing the locus of a laser spot generated by the semiconductor laser array shown in Fig. 8;

Fig. 10(a) and 10(b) are views for explaining the RE processing;

Fig. 11(a) and 11(b) are views showing examples in which the objective pixel of RE processing is divided into 3 × 3 and P = 0.5;

Fig. 12(a) and 12(b) are views showing examples in which the objective pixel of RE processing is divided into 2 × 2;

Fig. 13(a) and 13(b) are views showing another examples in which the objective pixel of RE processing is divided into 2 × 2;

Fig. 14 is a graph showing the characteristics of a high $\gamma$ photoreceptor used for the example;

Fig. 15 is a sectional view showing an example of the specific structure of the high $\gamma$ photoreceptor used for the example;

Fig. 16 is a graph showing a relation between the drive current of a semiconductor laser and the laser ray emitting output;

Fig. 17 is a graph showing an example of a case in which a relation between the gravity center in the primary scanning direction of small scanning lines and the recording position is changed;

Fig. 18 is a graph showing a case in which the average density of small scanning lines is converted;

Fig. 19 is a schematic illustration showing the structure of the second example of the present invention;

Fig. 20 is a schematic illustration showing the structure of the third example of the present invention; Fig. 21 is a block diagram showing a more specific example (the fourth example);

Fig. 22 is a timing chart for explaining the operation of the example shown in Fig. 21;

Fig. 23 is a schematic illustration showing the structure of the digital programmable delay generator 34 shown in Fig. 21;

Fig. 24 is a schematic illustration showing the structure of the essential portion of a digital copier (using a laser beam) to which the present invention is applied;

Fig. 25 is a block diagram showing the structure of the fifth example of the present invention;

Fig. 26 is a schematic illustration showing the effects of the example, wherein the formation of an electrostatic latent image on the photoreceptor drum 613 is illustrated in the drawing;

Fig. 27 is a block diagram showing the structure of the sixth example of the present invention;

Fig. 28 is a timing chart showing the operation of the example illustrated in Fig. 27;

Fig. 29 is a schematic illustration showing the generation of a PWM signal in the example shown in Fig. 27;

Fig. 30 is a schematic illustration showing an example of the position of the latent image formation on the photoreceptor in the case where recording position modulation is carried out using PWM signals (OUT1, OUT2 and OUT3, that is, PWM1 to PWM3);

Fig. 31 is a timing chart in the case where a system is employed in which a difference between the data of an objective pixel and that of a pixel immediately before it is taken as a difference calculation method for detecting the change in density of the calculation circuit 240 in Fig. 27;

Fig. 32 is a schematic illustration showing the effects of recording position modulation in the case shown in Fig. 31;

Fig. 33(a) and 33(b) are schematic illustrations respectively showing the structure and the operation of the D/A converters 262A to 262C shown in Fig. 27;

Fig. 34(a) and 34(b) are schematic illustrations respectively showing the structure and the operation of the triangular wave generation circuits 263A to 263C shown in Fig. 27;

Fig. 35(a) and 35(b) are schematic illustrations respectively showing the structure and the operation of the switching circuit 270 shown in Fig. 27;

Fig. 36 is a block diagram showing the structure of the seventh example of the present invention; and

Fig. 37 is a schematic illustration for explaining the gradation reproduction system in which PWM signals are used.

## DETAILED DESCRIPTION OF THE PREFERRED EMBODIMENTS

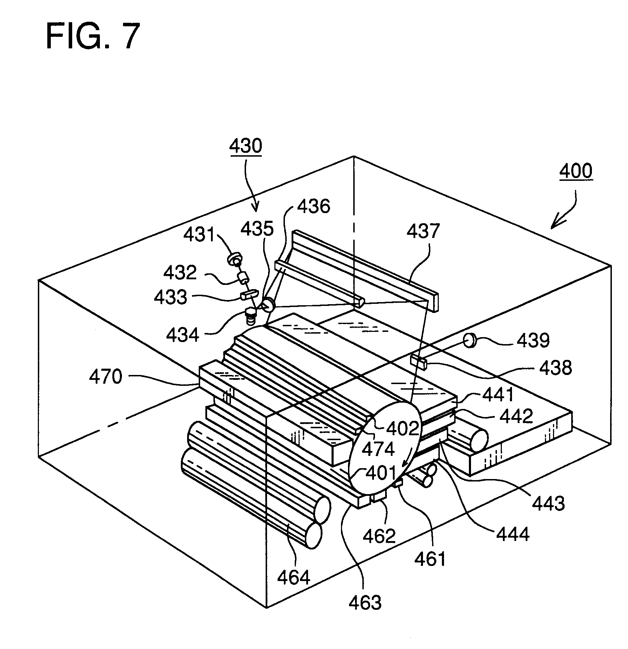

The constitution of image forming apparatus 400 that is an example to which the invention is applied will be explained as follows. Fig. 7 is a perspective view showing the schematic structure of an image forming apparatus of the present example.

The image forming apparatus 400 is operated in the following manner:

After the photoreceptor has been uniformly charged, a dot-shaped electrostatic latent image is formed by a beam of light that has been pulse-width modulated in accordance with the digital image density data sent from the computer or scanner. The electrostatic latent image is reversely developed with toner so that a dot-shaped toner image is formed. The aforementioned charging, exposing and developing processes are repeated to form a color toner image on the photoreceptor. This color toner image is transferred onto a recording paper, and the transferred image is fixed to obtain a color image.

Image forming apparatus 400 comprises a drum-shaped photoreceptor 401 rotating in the arrowed direction , scorotron charger 402 that gives charges uniformly on the photoreceptor 401, scanning optical system, that is, a laser writing unit 430, developing units 441 - 444 respectively containing yellow toner, magenta toner, cyan toner and black toner, scorotron transferring unit 462, separating unit 463, fixing roller 464, cleaning unit 470 and discharging unit 474.

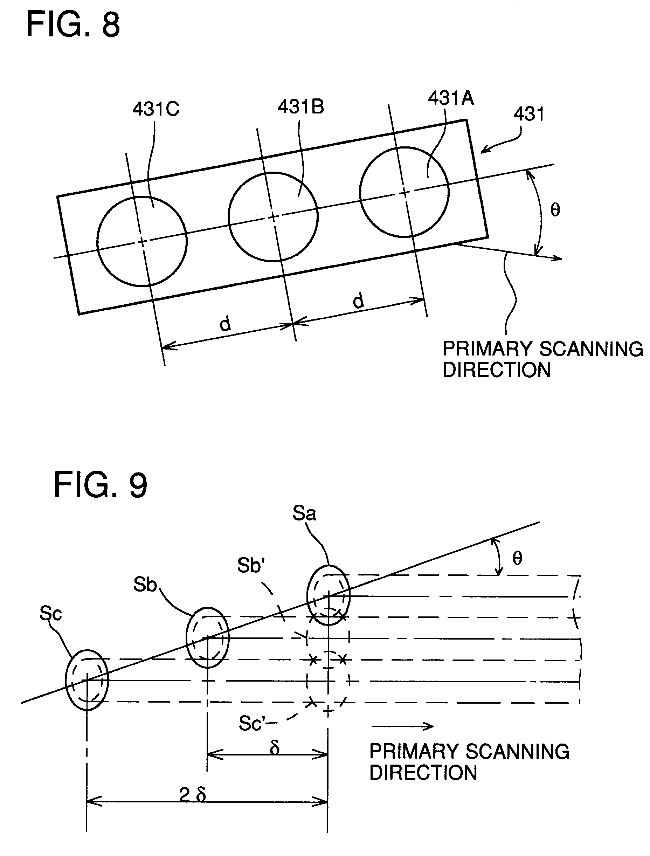

The photoreceptor 401 used in the present example has a high $\gamma$ characteristic, and an example of its structure is shown in Fig. 9.

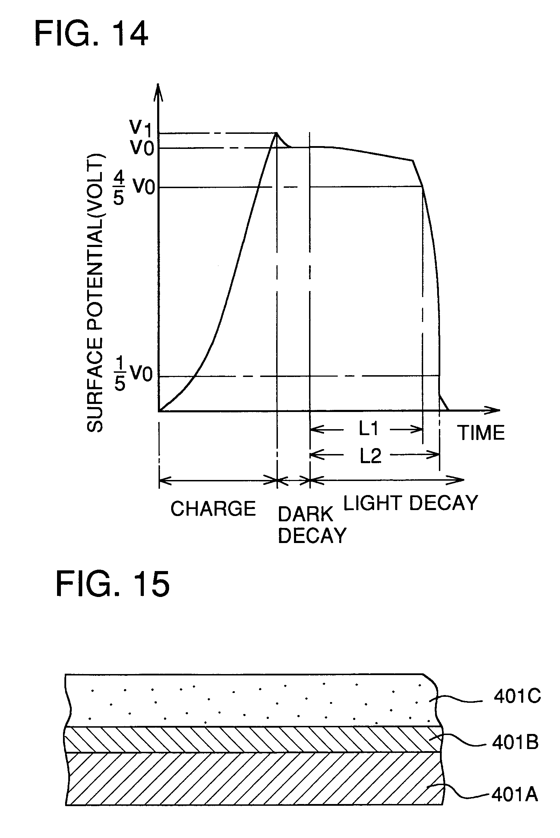

The photoreceptor drum 401 is composed of electrically conductive support 401A, interlayer 401B and light-sensitive layer 401C as shown in Fig. 15. The thickness of the light-sensitive layer 401C is about 5 - 100 $\mu$m and preferably is 10 - 50 $\mu$m. The photoreceptor 401 consists of conductive support 401A that is made of aluminum and has a diameter of 150 mm on which the interlayer 401B that is made of ethylene-vinyl acetate copolymer and is 0.1 $\mu$m in thickness is formed and 35 $\mu$m thick light-sensitive layer 401C is provided on the interlayer 401B.

As the conductive support 401A, a drum made of aluminum, steel or copper and having a diameter of about 150 mm is used. In addition, a belt-shaped one wherein a metal layer is laminated or evaporated on a sheet of paper or a plastic film, or a metallic belt such as a nickel belt made through a electroforming method may be used. Further, from the viewpoint that the photoreceptor can stand the high voltage charging of ±500 - ±2000V, pouring of electrons from electrically conductive support 401C can be prevented in the case of positive charging, and excellent light decay characteristics due to an avalanche phenomenon may be obtained, it is preferable that the interlayer 401B has a Hall mobility. For that reason, it is preferable that charge-transfer materials of a positive charging type described in Japanese Patent Application Open to Public Inspection No. 44662/1988 suggested previously by the assignee of the present invention are added by an amount of 10% by weight or less.

As the intermediate layer 401B, the following resins used for a light-sensitive layer for electrophotography use, for example, are employed in general.

(1) Vinyl type polymer such as polyvinyl alcohol (Poval), polyvinyl methylether and polyvinyl ethylether

(2) Nitrogen-containing vinylpolymer such as polyvinylamine, poly-N-vinylimidazole, polyvinylpyridine (quaternary salt), polyvinylpyrrolidone, and vinylpyrrolidone-vinylacetatecopolymer

(3) Polyether type polymer such as polyethyleneoxide, polyethyleneglycol and polypropyleneglycol

(4) Acrilic acid type polymer such as polyacrilic acid and its salt, polyacrylamide and poly-$\beta$-hydroxyethylacrylate

(5) Metaacrylic acid type polymer such as polymetaacrylic acid and its salt, polymetaacrylamide and polyhydroxypropylmetaacrylate

(6) Ether cellulose type polymer such as methylcellulose, ethylcellulose, carboxymethylcellulose, hydroxyethylcellulose and hydroxypropylmethylcellulose

(7) Polyethyleneimine type polymer such as polyethyleneimine

(8) Polyamino acid such as polyalanine, polyserine, poly-L-glutamic acid, poly-(hydroxyethyl)-L-glutamine, poly-$\delta$-carboxymethyl-L-cystein, polyproline, lysine-tyrosinecopolymer, glutamic acid-lysine-alaninecopolymer, silk fibroin and casein

(9) Starch and its derivatives such as starchacetate, hydroxinethylstarch, starchacetate, hydroxyethylstarch, aminestarch and phosphatestarch, and

(10) Polymer soluble in mixed solvent of water and alcohol such as soluble nylon that is polyamide and methoxymethylnylon (8 type nylon)

Light-sensitive layer 401C is formed in a manner wherein phthalocyanine fine-grains each having a grain size of 0.1 - 1 $\mu$m and being made of photoconductive pigment including basically no charge-transport material, antioxidants and binder resins are mixed and dispersed in a binder resin solvent to prepare a coating solution and the coating solution is coated on an interlayer, dried, and heat-treated if necessary.

When photoconductive materials and charge-transfer materials are used in combination, photoconductive materials consisting of photoconductive pigments and a small amount of charge-transport materials in an amount of not more than 1/5 or preferably of 1/1000 - 1/10 by weight of the photoconductive pigments and antioxidants are dispersed in binder resins to make a light-sensitive layer. When a photoreceptor with such a high $\gamma$ is used, it is possible to form a sharp latent image despite an enlarged beam diameter, resulting in effective recording with high resolving power.

Since color toner images are superposed on photoreceptor 401 in the present example, a photoreceptor having its spectral sensitivity on the infrared side and an infrared semiconductor laser are used so that a beam from a scanning optical system may not be shielded by the color toner images.

Light decay characteristics of a photoreceptor having a high $\gamma$ used in the present example will be explained as follows.

Fig. 14 is a graph showing characteristics of a photoreceptor with a high $\gamma$. In the figure, $V_1$ represents charging voltage (V), $V_0$ represents initial voltage (V) before exposure, $L_1$ represents an amount of irradiated light ($\mu$J/cm$^2$) of a laser beam necessary for the initial voltage $V_0$ to decay to 4/5 thereof and $L_2$ is an amount of irradiated light ($\mu$J/cm$^2$) of the laser beam necessary to decay to 1/5.

The preferable range of $L_2/L_1$ is as follows.

$1.0 < L_2/L_1 \leq 1.5$

The following is for the present example.

$V_1 = 1000(V)$, $V_0 = 950(V)$, $L_2/L_1 = 1.2$

Further, photoreceptor voltage at an exposure portion is 10V.

When photosensitivity at a position corresponding to the middle point of exposure where the initial voltage ($V_0$) decays to 1/2 thereof on the light decay curve is represented by E1/2, and photosensitivity at a position corresponding to the initial stage of exposure where the initial voltage ($V_0$) decays to 9/10 thereof is represented by E9/10, a photoconductive semiconductor satisfying the following relations is selected.

$(E1/2)/(E9/10) \geq 2$

or

$(E1/2)/(E9/10) \geq 5$

Incidentally, the photosensitivity in this case is defined as an absolute value of an amount of drop of voltage for a small amount of exposure.

On the light decay curve of the photoreceptor 401, an absolute value of a differential coefficient of a voltage characteristic, which means photosensitivity is small when an amount of light is small as shown in Fig. 14, increases sharply as an amount of light increases. Actually, the light decay curve is almost flat in the initial stage of exposure due to the poor photosensitivity for a certain period as shown in Fig. 14. However,in the middle stage and thereafter to the latter stage, the light decay curve suddenly falls almost linearly due to the ultra-high sensitivity, which represents ultra-high $\gamma$ characteristics. It is assumed that the photoreceptor 401 practically gains high $\gamma$ characteristics utilizing an avalanche phenomenon under the high voltage charging at +500 - +2000V. Namely, carriers generated on the surface of photoconductive pigment in the initial stage of exposure are trapped effectively in the surface phase between the pigment and coating resin to inhibit light decay completely which results in a sharp avalanche phenomenon in the middle stage and thereafter.

In the present invention, the photoreceptor is preferably provided with a high $\gamma$ characteristic. However, a photoreceptor can be used in which the amount of light is proportional to the amount of potential drop.

An image forming method used for the image forming apparatus of the invention will be explained. Image signal processing is carried out as follows:

An objective one pixel of image density data is composed of small pixels of m × n. The density data distribution of adjacent pixels including the objective pixel is replaced with the distribution of small pixels of m × n in one pixel. The data of the objective pixel is multiplied by a constant P, and the obtained result is distributed in accordance with the aforementioned distribution so as to obtain the image density data of small pixels. In accordance with the aforementioned image density data, recording position data is found from the density gravity center of each line of small pixels. By the obtained recording position data, the dot writing position of "n" lines is displaced so as to form an image. This dot writing position displacing operation will be referred to as recording position modulation, hereinafter. The processing in which the objective pixel is converted into image density data of small pixels divided into m × n will be referred to as resolution enhancement processing (RE processing), hereinafter. Recording of high density can be carried out by this RE processing. In this case, a high $\gamma$ photoreceptor is effective for latent image formation conducted by a laser beam writing device.

In the present invention, this RE processing is conducted

(1) in the case where the density data of the objective pixel is not less than the first threshold value, that is, the density data of the objective pixel is not less than a specific density. That is, most of the regions corresponding to the highlight portion do not conduct RE processing on the background of the document, and the density of small pixels of m × n is made to be uniform. In the case of CRT, it is possible to display the data described above. However, in the case of laser beam recording which will be described later, it is difficult to display the data uniformly. Therefore, a pulse is generated so that the recording position is located in the center of the pixel. As a result of the foregoing, the uniformity can be maintained in the highlight portion, and the occurrence of noise can be prevented in the image formation.

(2) In the case where the density gradation is large in a high density portion, in general, a dot is formed over the adjoining pixels unless the density recording position is located in the center. In the present invention, dot formation is carried out without affecting the adjoining pixels. However, in order to prevent the density fluctuation and the deformation of a recording dot, a pulse is generated so that the recording position can be located in the center of a pixel, even in the high density portion in the case where the density is not less than the specific second threshold value.

In the case of a CRT, data can be uniformly displayed, so that the small pixels of m × n are processed as uniform density. That is, RE processing is not carried out.

The following image forming apparatus is preferably used. The image forming apparatus carries out high density pixel recording in accordance with the density distribution data in the objective pixel determined correspondingly to the density data of pixels adjacent to the objective pixel, and in the case where specific density data of the objective pixel is not less than the first threshold value, recording position modulation is carried out in accordance with the determined density distribution. Further, in the case where the specific density data of the objective pixel is not more than the second threshold value, recording position modulation is carried out in accordance with the determined density distribution.

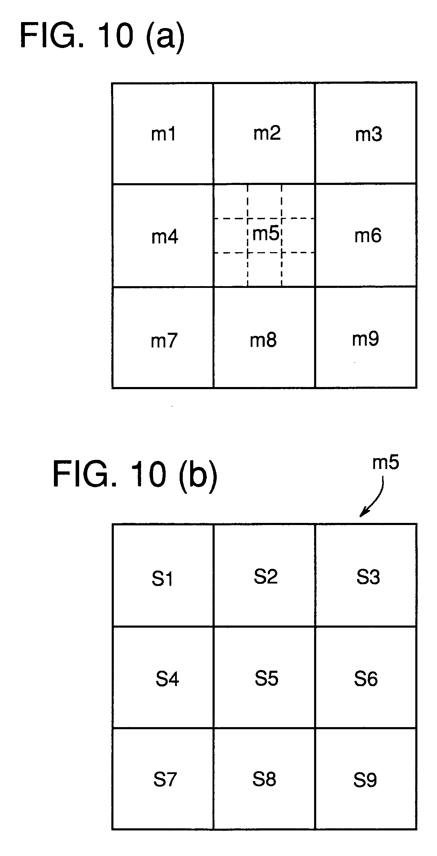

Fig. 10(a) is a plan view in which: the objective pixel is denoted by m5; objective pixel m5 is divided into 3 × 3; and adjacent pixels including the objective pixel m5 are denoted by m1 to m9. Fig. 10(b) is an enlarged view in which: the objective pixel m5 is divided into small pixels of 3 × 3; and the small portions are denoted by s1 to s9. In the aforementioned cases, m1 to m9 and s1 to s9 also denote the density of the portions.

RE processing will be explained as follows. When an example is taken in which the objective pixel m5 is divided into small pixels of 3 × 3, the density of small pixel si can be determined by the following equation (1).

$$si = (9 \times m5 \times P \times mi/A) + (1 - P) \times m5 \qquad (1)$$

In this equation, i = 1, 2, 3, ••• 9. P is a constant expressing the intensity of RE processing, and it is preferable that the value of P is in a range from 0.1 to 0.9. In the case where P is set at 1 in order to simplify the processing, the expected effects can be provided. Character A denotes a sum total of m1 to m9.

In the above equation, the term (9 × m5 × P × mi/A) is used in the case where a value obtained when the density of objective pixel m5 is multiplied by P is allotted in accordance with a ratio of the density of the adjacent pixel. The term (1 - P) × m5 is used in the case where the residual density of objective pixel m5 is uniformly allotted to each small pixel. Therefore, the element of blurring is taken into consideration.

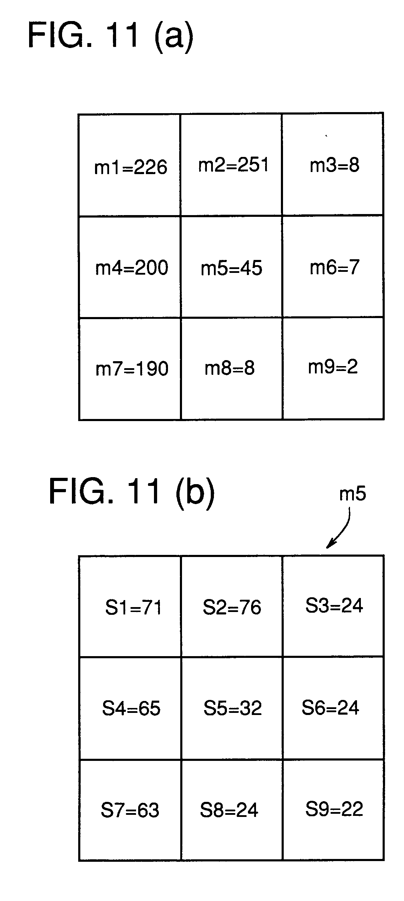

Fig. 11 is a view showing an example in which the objective pixel m5 is divided into 3 × 3 and P is set at 0.5. Fig. 11(a) is a view showing an example of density distribution of the adjacent pixels including the objective pixel m5. Fig. 11(b) is a view showing the density distribution in the objective pixel m5 in the case where the distribution is calculated under the condition that P = 0.5.

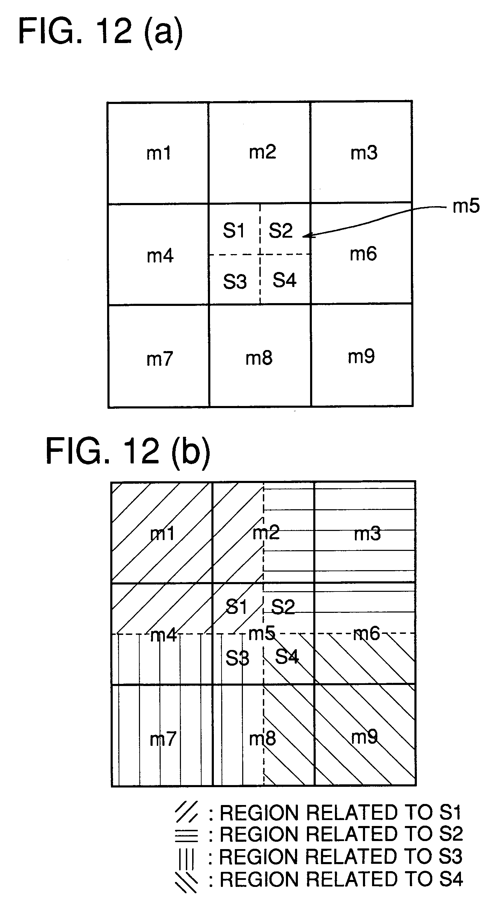

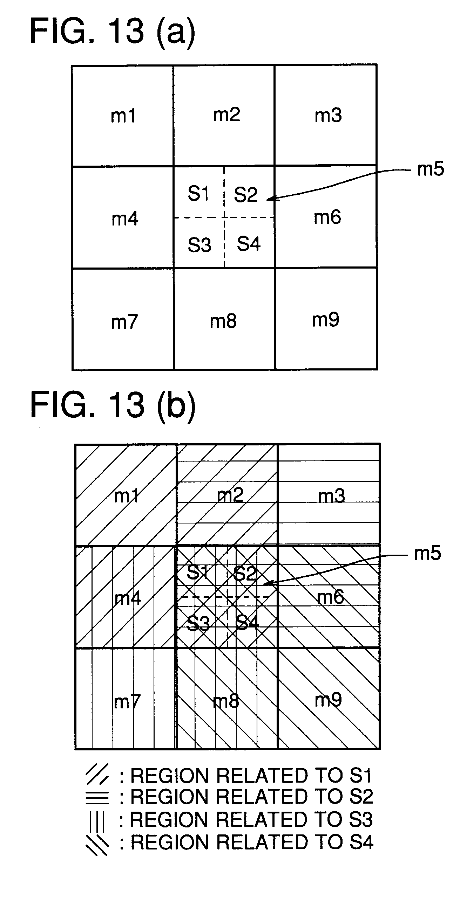

Figs. 12 and 13 are views showing examples in which the objective pixel m5 is divided into 2 × 2.

Fig. 12(a) is a view showing an example in which the objective pixel m5 is divided into 2 × 2. Fig. 12(b) is a view showing an example of the adjacent pixels relating to the small pixels s1 to s4 in the objective pixel.

The density of s1, s2, s3 and s4 is calculated in accordance with equation (2) to (5).

Equation (2) to (5)

Calculation of density of s1, s2, s3 and s4 is made according to Equation (2) to (5).

$$s1 = \frac{4 \times m1 + 2\,(m2 + m4) + m5}{A} \times m5 \times P + (1-P) \times m5 \quad \cdots \cdots \quad (2)$$

$$s2 = \frac{4 \times m3 + 2\,(m2 + m6) + m5}{A} \times m5 \times P + (1-P) \times m5 \quad \cdots \cdots \quad (3)$$

$$s3 = \frac{4 \times m7 + 2\,(m4 + m8) + m5}{A} \times m5 \times P + (1-P) \times m5 \quad \cdots \cdots \quad (4)$$

$$s4 = \frac{4 \times m9 + 2\,(m6 + m8) + m5}{A} \times m5 \times P + (1-P) \times m5 \quad \cdots \cdots \quad (5)$$

In the above expressions, A is the sum total of m1 - m9.

Fig. 13(a) is a diagram showing another example for dividing the objective pixel m5 into 2 × 2 and Fig. 13(b) is a diagram showing still another example of adjacent pixels related to small pixels s1 - s4 in the objective pixel. Calculation of density of s1, s2, s3 and s4 is made according to Equation (6) to (9).

Equation (6) to (9)

$$s1 = \frac{m1 + m2 + m4 + m5}{A} \times \frac{9}{4} \times m5 \times P + (1-P) \times m5 \quad \cdots \cdots \quad (6)$$

$$s2 = \frac{m2 + m3 + m5 + m6}{A} \times \frac{9}{4} \times m5 \times P + (1-P) \times m5 \quad \cdots \cdots \quad (7)$$

$$s3 = \frac{m4 + m5 + m7 + m8}{A} \times \frac{9}{4} \times m5 \times P + (1-P) \times m5 \quad \cdots \cdots \quad (8)$$

$$s4 = \frac{m5 + m6 + m8 + m9}{A} \times \frac{9}{4} \times m5 \times P + (1-P) \times m5 \quad \cdots \cdots \quad (9)$$

In the above equation, A is the sum total of m1 - m9.

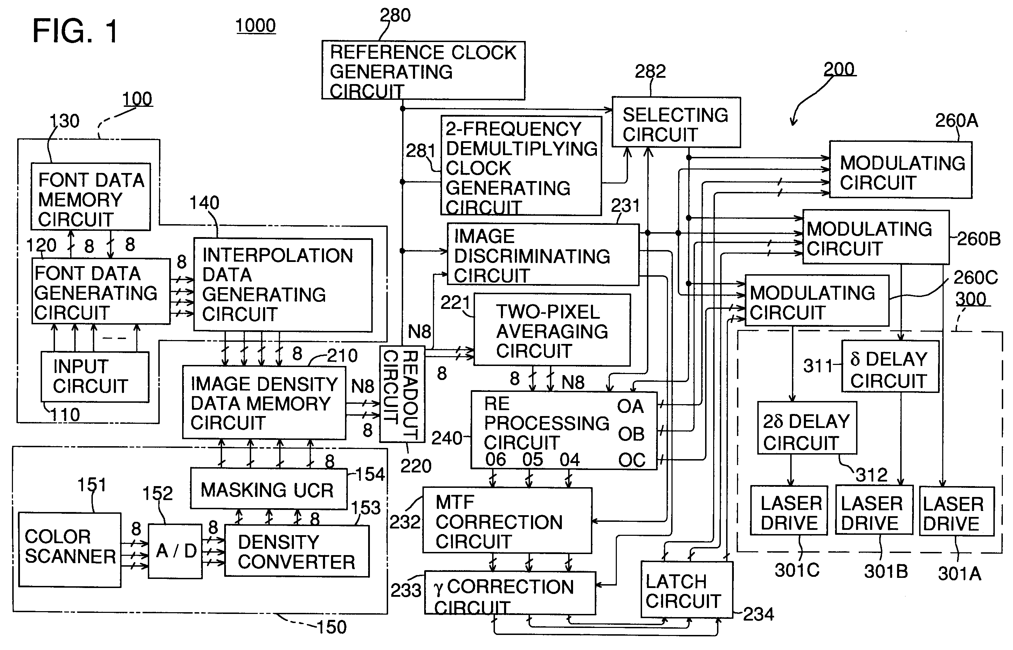

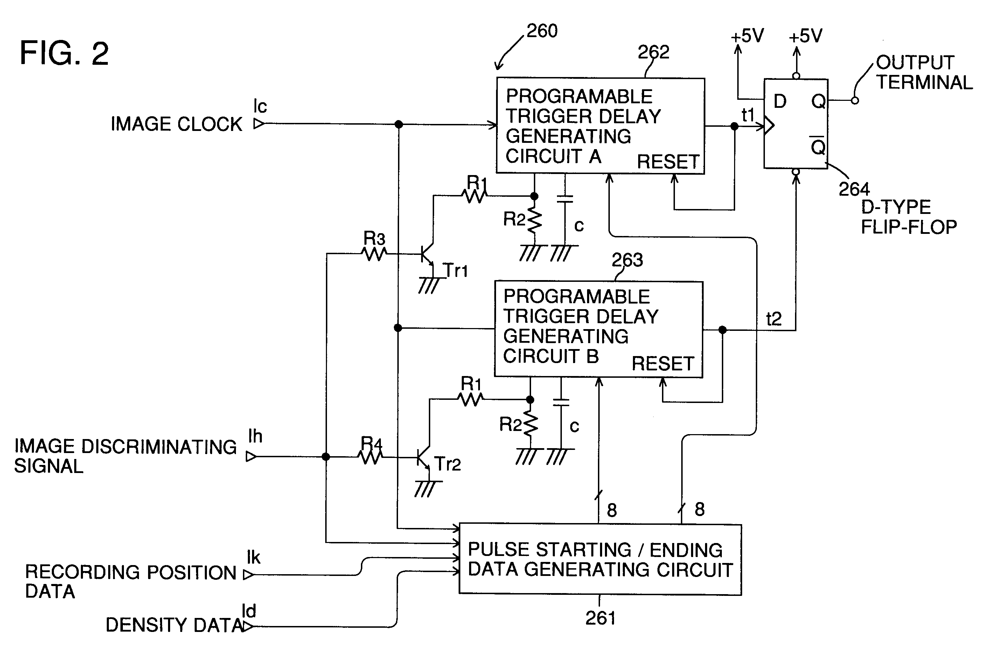

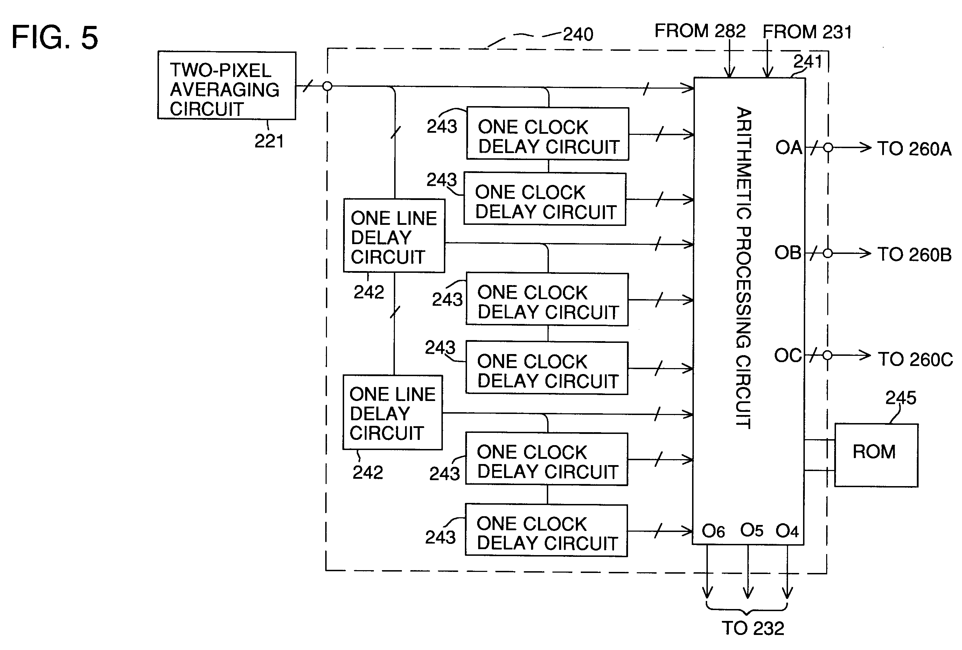

Fig. 1 is a block diagram (example for dividing the objective pixel into 3 × 3) showing an example of an image processing circuit used for the image forming apparatus to which the invention is applied. Fig. 2 is a block diagram showing the modulation circuits 260A to 260C shown in Fig. 1. Fig. 5 is a block diagram showing the RE processing circuit illustrated in Fig. 1.

Image processing circuit 1000 of the present example is a circuit constituting a drive circuit for a scanning optical system and it is composed of image data processing circuit 100, modulated signal generating circuit 200 and raster scanning circuit 300.

Image data processing circuit 100 which interpolates an edge portion of font data and outputs is composed of input circuit 100 composed of a computer, font data generating circuit 120, font data storage circuit 130 and interpolation data generating circuit 140, and it sends character code signals from input circuit 110, size code signals, position code signals and color code signals to font data generating circuit 120. The font data generating circuit 120 selects address signals from four kinds of input signals and sends them to the font data storage circuit 130. The font data storage circuit 130 sends font data corresponding to one character that corresponds to the address signals to the font data generating circuit 120. The font data generating circuit 120 sends font data to the interpolation data generating circuit 140. The interpolation data generating circuit 140 interpolates, using medium density, a serrated or washed portion of image density data produced on the edge portion of the font data and sends them to image density data storage circuit 210 composed of a frame memory. With regard to colors to be generated, the relevant color is converted to density data of each of Y, M, C and BK. Thus, a font is subjected to bit map development in each frame memory with each color having the same form and different density rates.

9

The modulation signal generating circuit 200 includes the image density data storage circuit 210, reading circuit 220, 2 pixel averaging circuit 221, image discrimination circuit 231, MTF correction circuit 232, $\gamma$ correction circuit 233, latch circuit 234, RE processing circuit 240, modulation circuits 260A to 260C that are modulation means, reference clock generating circuit 280, 2-frequency demultiplying clock generating circuit 281, and selecting circuit 282.

The image density data storage circuit 210 is a normal page memory (hereinafter referred to simply as page memory 210), and is further a RAM (random access memory) storing with a unit of one page, and it has a capacity for the storage of multivalued image density data corresponding to at least one page (equivalent to one image). Further, when it is an apparatus to be employed in a color printer, it is caused to be provided with a page memory capable of storing image density data corresponding to a plurality of colors such as, for example, yellow, magenta, cyan and black.

The reading circuit 220 reads continuous image density data of one scanning line unit that continues synchronously with reference clock $DCK_0$, from the image density data storage circuit (page memory) 220, wherein an index signal to determine the start timing of raster scanning is used for a trigger signal, and the image density data is sent to the 2 pixel averaging circuit 221 and the image discriminating circuit 231.

The latch circuit 234 is a circuit that latches the image density data only for a period of time in which the RE processing circuit 240 carries out processing.

The reference clock generating circuit 280 is a pulse generating circuit. The reference clock generating circuit 280 generates a reference clock $DCK_0$ that is a pulse signal of the same cycle period as that of the pixel clock, and sends it to the reading circuit 220, pixel discriminating circuit 231, 2-frequency demultiplying clock generating circuit 281, and selecting circuit 282.

The 2-frequency demultiplying clock generating circuit 281 generates a 2-frequency demultiplying clock $DCK_1$, the period of which is twice as long as that of the reference clock $DCK_0$, in accordance with the reference clock $DCK_0$, and the generated double cycle clock $DCK_1$ is outputted to the selecting circuit 282.

The selecting circuit 282 selects one of the reference clock $DCK_0$ and the 2-frequency demultiplying clock $DCK_1$ in accordance with a selecting signal sent from the image discriminating circuit 231 that will be described later, and the selected clock is outputted to the RE processing circuit 240, the modulation circuits 260A to 260C, and others.

As shown in Fig. 2, the structures of the modulation circuits 260A to 260C are the same, so they are represented by numeral 260. The modulating circuits 260 include the pulse start and end data generating circuit 261, programmable delay generating circuit A262, programmable delay generating circuit B263, and D-type flip-flop 264. In the modulating circuit 260, a pulse-width-modulation signal is generated in accordance with the density data and recording position data sent from the RE processing circuit 240.

The image discriminating circuit 231 discriminates whether the inputted data is from the character region or the half-tone region. The image discriminating circuit 231 sends a selecting signal to the selecting circuit 282 so that reference clock $DCK_0$ can be selected with respect to the character region and so that 2-frequency demultiplying clock $DCK_1$ can be selected with respect to the half-tone region. The image discriminating circuit 231 sends a signal to the 2 pixel averaging circuit 221 so that the 2 pixel averaging circuit 221 can not be activated with respect to the character region and so that the 2 pixel averaging circuit 221 can be activated with respect to the half-tone region and the averaged density data of adjacent 2 pixels can be outputted. As described later, the image discriminating circuit 231 sends a signal to the MTF correction circuit 232 so that it can be activated, and also sends a signal to the the $\gamma$ correction circuit 233 so that it can not be activated. Also, the image discriminating circuit 231 sends a discriminating signal to the RE processing circuit 240 and the modulation circuits 260A to 260C.

As shown in Fig. 5, the FE processing circuit 240 includes the one line delay circuit 242, one clock delay circuit 243, and arithmetic processing circuit 241. The one line delay circuit 242 is operated in the following manner: the first one scanning line of image density data in the three lines of image density data is delayed by the two line scanning time; the intermediate one scanning line of image density data in the three lines of image density data is delayed by the one line scanning time; and the last one scanning line of image density data is not delayed. Further, each image density data is delayed by the one clock delay circuit 243 by an amount corresponding to two reference clocks or one reference clock. Then, the image density data, the objective pixel, and the adjacent pixels are simultaneously sent to the arithmetic processing circuit 241.

In the arithmetic processing circuit 241, the RE processing is carried out, so that density data of small pixels can be provided. First, a case is shown in which the density distribution on one pixel is found.

The provided density data of small pixels are classified into a small scanning line in Fig. 10 including s1, s2, s3 •••, a small scanning line including s4, s5, s6 •••, and a small scanning line including s7, s8, s9 •••. These three small scanning lines correspond to the one scanning line of the original pixel.

The arithmetic processing circuit 241 also makes a calculation to find the recording position data (8 bit data) from the center of the gravity of the average density (8 bit data) of a unit pixel on each small scanning line and also from the center of the gravity of the density data of the original one pixel on each small scanning line. The digital signal of the average density data (referred to as density data, hereinafter) is outputted from the output terminals O4, O5 and O6 into each input terminal $I_d$ of the modulation circuits 260A to 260C through the MTF correction circuit 232, $\gamma$ correction circuit 233, and latch circuit 234. The recording position data is outputted from the output terminals OA to OC into each input terminal $I_k$ of the modulation circuits 260A to 260C. That is, when the gravity center of density of s1, s2 and s3 of pixel m5 is located at the left end of s1, the minimum digital signal (0) is outputted from the output terminal OA into the modulation circuit 260A, and when the gravity center of density is located in the center of s2, the digital signal (128) of the intermediate value is outputted from the output terminal OA into the modulation circuit 260A, and when the gravity center of density is located at the right end of s3, the digital signal of the maximum value (255), which is the recording position data corresponding to the position of the gravity center of density, is outputted from the output terminal OA into the modulation circuit 260A. In the same manner, the recording position data of the second small scanning line (in this case, the small scanning line in the center) determined by the position of the gravity center of density of s4, s5 and s6 of pixel m5 is outputted into the modulation circuit 260B from the output terminal OB, and the recording position data of the third small scanning line determined by the position of the gravity center of density of s7, s8 and s9 of pixel m5 is outputted from the output terminal OC into the modulation circuit 260C.

In the case where an image is in the half-tone region, the two pixel averaging circuit 221 is activated by a signal sent from the image discrimination circuit 231, and the averaged image density data of two pixels adjoining in the primary scanning direction is sent to the RE processing circuit 240. Therefore, the aforementioned RE processing is carried out in which the original two pixels are assumed to be one pixel.

The discriminating circuit 231 compares the image data of the objective pixel with the first predetermined threshold value that is low and the second predetermined threshold value that is high. In the case where the image data is out of the region from the first to the second threshold value, the signal is sent to the RE processing circuit 240. From the RE processing circuit 240, the recording position data (128), in which the recording position is located in the center with respect to the components of all colors, is sent to the modulation circuits 260A, 260B and 260C, and at the same time, the MTF correction circuit 232 is not activated. As a result of the foregoing, the average density data of each small scanning line is not corrected by the MTF correction circuit 232 but corrected by the $\gamma$ correction circuit 233, and then the signal is sent to the modulation circuits 260A, 260B and 260C through the latch circuit 234.

Accordingly, the MTF correction and position modulation is not carried out in the highlight and the high density regions. Therefore, a uniform image without noise can be formed.

Also, the image discriminating circuit 231 discriminates under the aforementioned condition whether an image is in the character region or in the half-tone region. This discrimination is conducted by the change of density in the pixels of $16 \times 16$ including the objective pixel. In a region where the change of density is substantial, the objective pixel is discriminated to be in the character region, and in a region where the change of density is not substantial, the objective pixel is discriminated to be in the half-tone region. In the case where the result of region discrimination is different with respect to a very small region, for example, in the case where a half-tone region is isolated in a character region, the region is judged to be characters. In the case of a half-tone region, judgment is made in the same manner. In the case where a region has been discriminated to be a character region of characters and lines, a selection signal is outputted to the selecting circuit 282 so that reference clock $DCK_0$ can be outputted as an image clock, and the MTF correction circuit 232 and the $\gamma$ correction circuit 233 are not activated, and the density data is sent to the modulation circuits 260A, 260B and 260C through the latch circuit 234 without being subjected to any processing. As a result of the foregoing, clear characters and edges can be reproduced without fluctuation of image tone. In the case where the image is in the half-tone region, a selecting signal is outputted to the selecting circuit 282 so that 2-frequency demultiplying clock $DCK_1$ can be outputted as an image clock.

When the image signal is subjected to the processing in the manner described above, an image having high gradation property can be formed in the half-tone region, and also a sharp and clear character image can be formed.

Image density data used for recording position determination and RE processing is preferably achromatic data having G components that agrees with the sight of vision or having G components. In this example, the density data is used that has been converted to agree with a specific color, for example, R + 2G + B (R is density data of red, G is density data of green, and B is density data of blue). For convenience sake, the density data of (R + 2G + B) is represented by N in this example.

When component colors have a recording position in common with each other, the image gradation property can be guaranteed, and a tone change can be prevented. Also, component colors have image density data for the image discrimination circuit 231 in common with each other from the same reason, and it is represented by N in this example.

The modulation circuits 260A, 260B and 260C generates a modulation signal that is a writing pulse subjected to recording-position-modulation corresponding to recording position data and pulse-width-modulation corresponding to density data from the recording position data and density data. Three continuous small scanning lines in which the modulation signals are arranged in parallel are made to be one unit and sent to the raster scanning circuit 300.

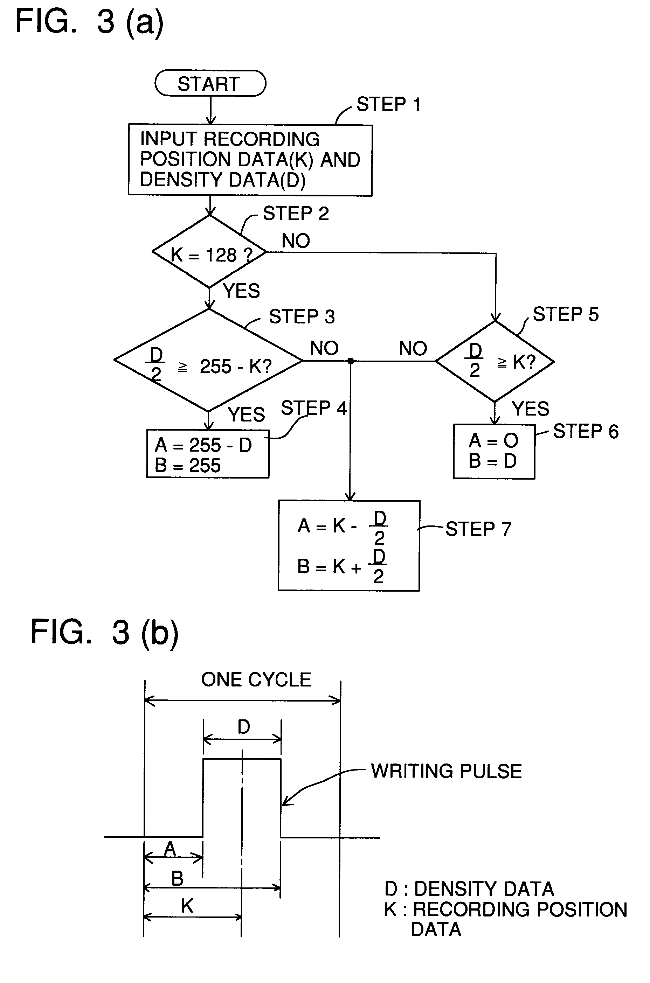

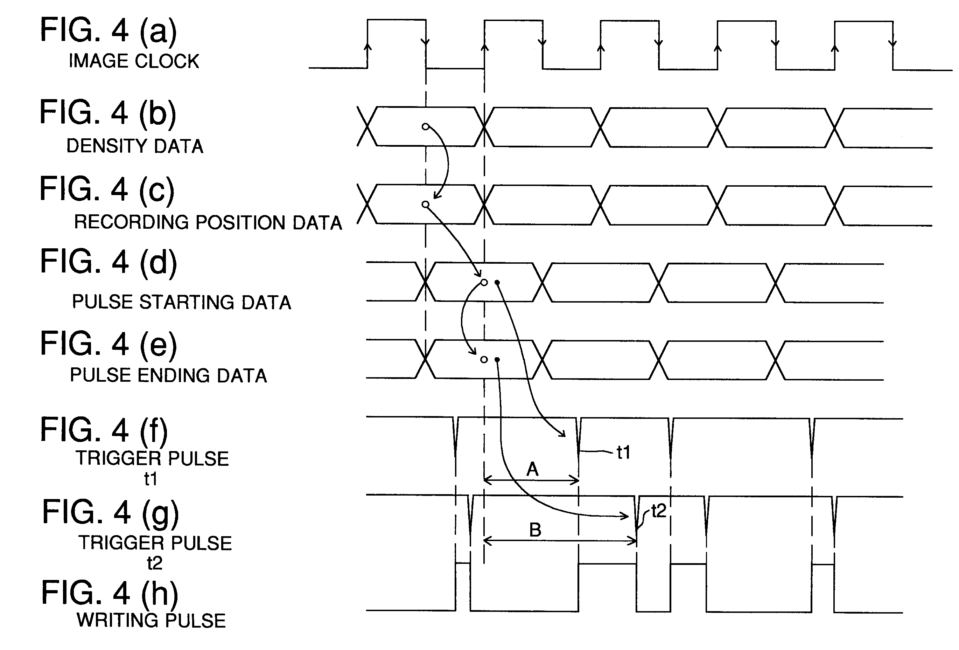

With reference to the flow chart shown in Fig. 3(a) to 3(b) and the time chart shown in Fig. 4, the structure and operation of the modulation circuit 260 shown in Fig. 2 will be explained as follows.

A digital programmable delay generator AD9501 that is an analog device can be used for the programmable delay generating circuit A262 and the programmable delay generating circuit B263 shown in Fig. 2. These delay generators are delay circuits that can execute digital programming, and delay time of an input pulse can be programmed by these delay circuits. The maximum delay time of these delay circuits can be determined by condenser C and resistances R1 and R2 that are provided outside.

The input terminals $I_c$, $I_h$, $I_k$ and $I_d$ of the modulation circuit 260 are respectively inputted with an image clock sent from the selecting circuit 282, image discriminating signal sent from the image discriminating circuit 231, and recording position data and density data processed and outputted by the RE processing circuit 240.

The pixel discriminating signal is turned on in the character region and turned off in the half-tone region. When this pixel discriminating signal is turned on, $T_{r1}$ and $T_{r2}$ are communicated with each other, so that the combined resistance of R1 and R2 becomes the resistance to determine the aforementioned maximum delay amount. Accordingly, the maximum delay amount becomes small, and when this pixel discriminating signal is turned off, the maximum delay amount becomes large. Therefore, in the case of a character region, the delay amount becomes the maximum value that is the same as the period of reference clock $DCK_0$, and in the case of a half-tone image, the delay amount becomes the maximum value that is the same as the period of 2-frequency demultiplying clock $DCK_1$. In the character region, reference clock $DCK_0$ is inputted into terminal $I_c$ as an image clock, and in the half-tone region, 2-frequency demultiplying clock $DCK_1$ is inputted into terminal $I_c$ as an image clock. Consequently, in the character region, a modulation signal, the unit of which is the original pixel unit (1 dot) is generated, and in the half-tone region, a modulation signal, the unit of which 2 dots, is generated.

Generation of pulse start data and that of pulse end data are carried out in accordance with the flow chart shown in Fig. 3(a). When the aforementioned various signals, recording position data and density data are inputted into the pulse start and end data generating circuit 261 (step 1), it is judged whether or not value K of the recording position data is not less than 128(step 2). When it is not less than 128, it is judged whether or not 1/2 of value D of density data is not less than (255-K) (step 3). In the case of YES, the program advances to step 4, and value A of pulse start data is set at (A = 255 - D), and value B of pulse end data is set at (B = 255).

When it is not {K ≧ 128} in step 2, the program advances to step 5, and it is judged whether or not 1/2 of value D is not less than K (step 5). In the case of YES, value A of pulse start data is set at {A = 0}, and value B of pulse end data B is set at {B = D} (step 6).

In the case of NO in step 3, that is, in the case of {D/2 < (255 - K)} in step 3, and in the case of NO in step 5, that is, in the case of {D/2 < K} in step 5, the program advances to step 7, and value A of pulse start data and value B of pulse end data are set as follows:

{A = K - D/2}, and {B = K + D/2}

Density data D, recording position data K, pulse start data A and pulse end data B are illustrated in Fig. 3(b). Each data is composed of 8 bits, and the start point of one period is 0, and the end point is 255. The waveform of a pulse shown in the drawing shows a case in which a writing operation is carried out by the laser writing device 430 at a high level.

The relation among pulse start data A, pulse end data B, recording position data K and density data D is shown as follows.

K = 1/2(B - A) + A    (value in the center of a pulse)
D = B - A    (value of pulse width)

Figs. 4(a) - 4(h) are time charts in the case of generation of a writing pulse that is a modulation signal. In the drawings, Fig. 4(a) denotes an image clock, Fig. 4(b) denotes density data, Fig. 4(c) denotes recording position data, Fig. 4(d) denotes pulse start data, Fig. 4(e) denotes pulse end data, Fig. 4(f) denotes trigger pulse $t_1$ that will be described later, Fig. 4(g) denotes trigger pulse $t_2$ that will be described later, and Fig. 4(h) denotes a pulse of the aforementioned modulated writing signal.

The pulse start data is inputted into the programmable delay generator A262, and trigger pulse $t_1$ delayed by the amount of A with respect to the start point of the period is sent to the D type flip flop 264. The pulse end data is inputted into the programmable delay generator B263, and trigger pulse $t_2$ delayed by the amount of B with respect to the start point of the period is inputted into the D type flip flop 264. As a result of the foregoing, the writing pulse shown in Fig. 4(h) is generated and sent to the laser writing device 430 from terminal Q of the D type flip flop 264.

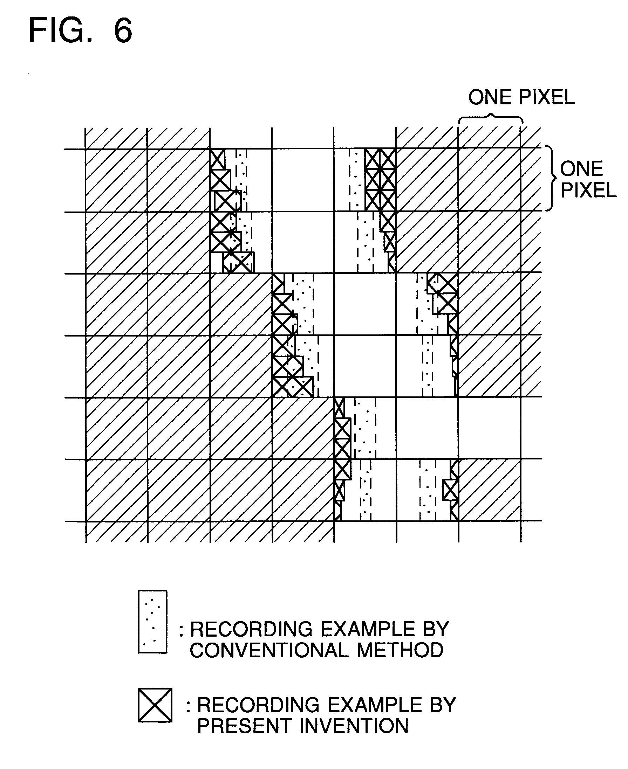

In the case of pixels of low and high density portions, the recording position data is set at 128, and the recording position modulation is not carried out. As a result of the aforementioned modulation signal generation, in a region where the density fluctuates greatly, recording position modulation is carried out in the following manner: the positions of small dots on n lines in the objective pixels are displaced in the direction of the line of the original characters and line images compared with the density data of the original adjacent pixels as shown in Fig. 6. As a result, characters and line images can be reproduced clearly.

In a region judged to be the half-tone region, recording is carried out by the unit of 2 dots, so that half-tone images of high gradation can be reproduced.

Further, when value K of recording position data is shifted in the auxiliary scanning direction, a half-tone dot having a screen angle can be provided. For example, when the screen angle of yellow components is set at 45°, that of magenta components is set at 26.6°, that of cyan components is set at -26.6° and that of black components is set at 0°, the uniformity of color reproduction can be improved and the occurrence of moire stripes can be prevented.

When the screen angle of black components is set at 0°, the aforementioned modulation means can be used as it is.

The raster scanning circuit 300 includes a $\delta$ delay circuit 311, $2\delta$ delay circuit 312, laser drivers 301A to 301C, index detection circuit (not shown), and polygonal mirror driver.

The laser drivers 301A to 301C oscillate the semiconductor array 431 having a plurality of laser beam emitting portions 431A to 431C in accordance with the modulation signal sent from the modulation circuits 260A to 260C. A signal corresponding to the amount of beam sent from the semiconductor array 431 is fed back to the laser drivers, and the laser drivers 301A to 301C drive the semiconductor array 431 so that the amount of beam can be constant.

The index detection circuit detects the position of the surface of the rotational polygonal mirror 434 rotating at a predetermined speed by the index signal sent from the index sensor 439 shown in Fig. 7, so that optical scanning is conducted by the raster scanning system in accordance with the modulated image density signal at the period of primary scanning. The scanning frequency is 2204.72 Hz, the effective printing width is 297 mm, and the effective exposure width is 306 mm.

The polygonal mirror driver includes a DC motor rotating at a predetermined speed so that the rotational polygonal mirror 434 is rotated at the speed of 16535.4 rpm.

As shown in Fig. 8, the semiconductor array 431 includes three light emitting portions 431A to 431C that are disposed at regular intervals forming an array. In general, it is difficult to reduce the interval to a value not more than 20 $\mu$m. Therefore, the light emitting portions are disposed as shown in Fig. 8 in the following manner: an axis passing through the centers of the light emitting portions 431A to 431C is set in parallel with the rotational shaft of the rotational polygonal mirror 434, and the axis is inclined by a predetermined angle with respect to the primary scanning direction. In the manner described above, laser beam spots sa, sb and sc formed on the photoreceptor 401 by the semiconductor laser array 431 scan the photoreceptor surface in such a manner that the intervals between the spots are very close as illustrated in Fig. 9. However, as a result of the foregoing, the positions of laser beam spots sa, sb and sc are shifted with respect to the primary scanning direction. In order to correct the shifted positions of laser beam spots, the $\delta$ delay circuit 311 is provided between the modulation circuit 260B and the laser driver 301B, and the 2 $\delta$ delay circuit 312 is provided between the modulation circuit 260C and the laser driver 301C, so that the signals are appropriately delayed. In this way the shifted position can be corrected. Accordingly, laser beam spots sa, sb and sc emitted from the semiconductor array 431 are changed into sa', sb' and sc' vertically aligned with respect to the primary scanning direction. Recording is carried out by these laser beam spots sa', sb' and sc'.

In the case where the RE processing is carried out while the objective pixel is divided into small pixels of 2 × 2, a semiconductor array having 2 light emitting portions is utilized.

In the above example, image recording is carried out in the following manner: average density data and recording position data of each small scanning line obtained by the RE processing circuit 240 is inputted into the modulation circuits 260A to 160C; and the writing pulse obtained in the aforementioned process is inputted into the laser drivers 301A to 301C so as to record the image. However, the following image processing can be also provided.

That is, image processing can be carried out in the following manner:

For example, an intermediate value 128 is inputted into the modulation circuits 260A to 260C as image data; only recording position modulation is conducted by the recording position data obtained in the RE processing circuit 240; the average density data in pixel m5 on each small scanning line outputted from terminals O4 to O6 of the RE processing circuit 240 is converted into an analog value; and the obtained analog value is inputted into each of the laser drivers 301A to 301C so that the drive current can be controlled so as to control the output of light emission of the semiconductor lasers 431A to 431C.

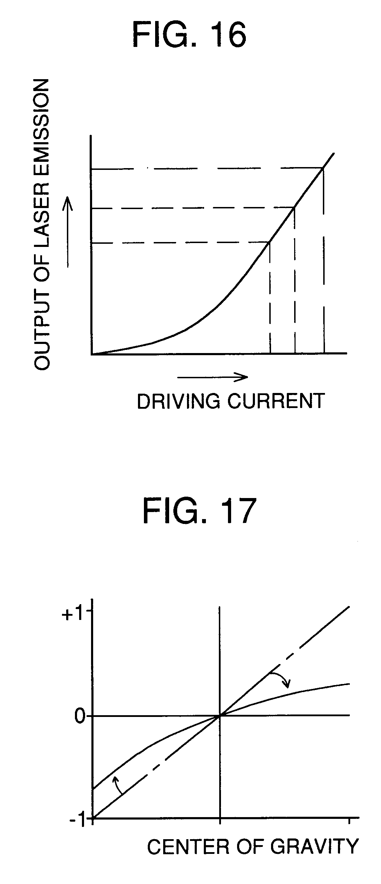

Fig. 16 is a graph showing an example of the relation between the drive current of a semiconductor laser and the output of emission of laser beams.

The process of image formation will be explained with respect to the image forming apparatus 400 shown in Fig. 7.

First, the photoreceptor drum 401 is uniformly charged with electricity by the scorotron charger 402. An electrostatic latent image corresponding to yellow is formed on the surface of the photoreceptor drum 401 in the following manner: a laser beam modulated by yellow data (8-bit digital density data) sent from the image density data storage circuit 210 is irradiated on the photoreceptor drum 401 through the cylindrical lens 433, rotational polygonal mirror 434, $f\theta$ lens 435, cylindrical lens 436 and reflection mirror 437. The electrostatic latent image corresponding to yellow is developed by the first developing unit 441, so that a very sharp dot-shaped first toner image (yellow toner image) is formed on the photoreceptor drum 401. This first toner image is not transferred onto a recording paper but passes under the cleaning unit 470 that has been withdrawn. Then, the photoreceptor drum is electrically charged again by the scorotron charger 402.

Next, a laser beam modulated by magenta data (8-bit digital density data) is irradiated on the photoreceptor drum 401 so that an electrostatic latent image is formed. This electrostatic latent image is developed by the second developing unit 442 so that the second toner image (magenta toner image) is formed. In the same manner, the third toner image (cyan toner image) is formed by the third developing unit 443. These toner images are successively accumulated on the surface of the photoreceptor drum 401 so that a 3-color toner image can be formed. Finally, the fourth toner image (black toner image) is formed. In this way, a 4-color toner image is formed on the photoreceptor drum 401.

An excellent photoreceptor having high $\gamma$ property is used for the photoreceptor drum 401 of the image forming apparatus of this example. Therefore, an electrostatic latent image can be stably formed even when charging, exposing and developing operations are repeatedly conducted on a toner image. That is, even when a laser beam modulated in accordance with a digital signal is irradiated on a toner image, a highly sharp dot-shaped electrostatic latent image without any fringes can be formed. As a result, a sharp toner image can be provided.

These 4-color toner image is transferred by the action of the transfer unit 462 onto a recording paper supplied from a paper supply unit.

The transferred recording paper is separated from the surface of the photoreceptor 401 by the separator 463, and conveyed by a guide and a conveyance belt to the fixing roller 464 so that the transferred toner image is thermally fixed. Then, the recording sheet is discharged onto a paper discharge tray.

In this example, an experiment was made while factor P of RE processing was variously changed. As a result of the experiment, excellent images were provided when factor P was set in a range from 0.1 to 0.9. However, in the case where factor P was small, characters were not sufficiently sharp, and in the case where factor P was large, the edge portions of characters and line images were excessively emphasized. Accordingly, the preferable range of factor P was from 0.3 to 0.7. As a result of the foregoing, the edge portions of characters and line images were able to be clearly reproduced, and even small characters were able to be finely reproduced. Further, the low and high density portions were not affected. The reason is as follows: according to this example, recording position modulation is stopped with respect to the pixels of low and high density portions, so that factor P is effectively 0.

Although, in this method, P can be used as a constant, it is preferable that P is changed in synchronization with the recording period, that is, corresponding to the image (in a character region or half-tone region). When the value of P is defined as $P_1$ in the case where the recording period is short, that is, the image is in the character region, and the value of P is defined as $P_2$ in the case where the recording period is long, that is, the image is in the half-tone region,

$P_1 > P_2$

is preferable. That is, when the image exists in the character region, the value of P is large, preferably 0.9 to 0.4, and when the image exists in the half-tone region, the value of P is small, preferably 0.6 to 0.1.

P = 0 corresponds to the value in the case where recording position modulation is not conducted.

Further, in the present invention, the ratio of RE processing can be changed.

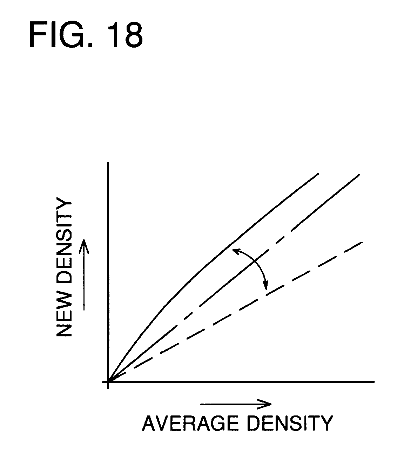

Fig. 17 is a graph showing an example of the case where the relation between the recording position in the primary scanning direction and the gravity center is converted. Fig. 18 is a graph showing an example of the case where the average density in the auxiliary scanning direction is converted.

In the arithmetic processing circuit 241, the recording position can be changed according to a conversion equation which is set beforehand, for example, as shown in Fig. 17 using a ROM 245 in which the result obtained from the image density data by arithmetic processing is contained, or on which the above result is provided externally. Similarly, the average density data of small scanning line can be also changed as shown in Fig. 18.

Especially, it is preferable that the ratio of conversion shown in Fig. 17, and Fig. 18 is changed corresponding to the case where the image clock is changed. When the period of the image clock is long, it is preferable that gradation is considered to be important, and the ratio of the recording position modulation is decreased, or $\gamma$ of gradation is decreased.

In the aforementioned flow of the image data, an example of a laser printer which outputs the data having been stored once in the page memory 210 is explained. However, the present invention is not limited to the specific embodiments, but when the image data processing circuit 100 is replaced by the image data processing circuit 150 composed of the color scanner 151, the A/D converter 152, the density converter 153, the masking UCR circuit 154 and the like, and the image density data is inputted into the processing circuit 150 from the scanner and the image is processed in the circuit, the present invention can be adopted to other image forming apparatus such as a copying apparatus and the like.

In this example, the image clock is changed over for each pixel in accordance with the result of image discrimination. However, it is possible to uniformly change over the entire image screen in accordance with the external command such as characters and a photographic mode.

As explained above, according to the present invention, the RE processing is carried out in the following manner: in accordance with the density data of the objective pixel, with respect to the objective pixel included in the specific density, the objective pixel is divided into small pixels, and the density of the objective pixel is distributed to each small pixel according to the density distribution of adjacent pixels including the objective pixel. In the present invention, the recording position data corresponding to the position of the gravity center of density of the image data that has been subjected to the RE processing, and the average density data of each small scanning line are found, and a modulation means is provided that generates a writing pulse not affecting the adjacent pixels that is recording-position-modulated and also pulse-width-modulated, and recording-position-modulation is not conducted with respect to the low and high density portions. As a result of the foregoing, the writing dot does not enter other pixels, so that they are not affected. Therefore, a recording image of high quality can be provided. Further, in the present invention, image discrimination is conducted by the image discrimination circuit, and in the case of a character region, the writing operation is conducted by a short period of 1 dot, and in the case of a half-tone region, the writing operation is conducted by a long period of 2 dots so as to conduct color image recording. Consequently, the sharpness of a color image can be improved without fluctuation of color tone when the color image is formed in accordance with a scanner, CG or font data. Further, a high $\gamma$ type photoreceptor is applied to the apparatus of the present invention, so that the effects can be further improved.

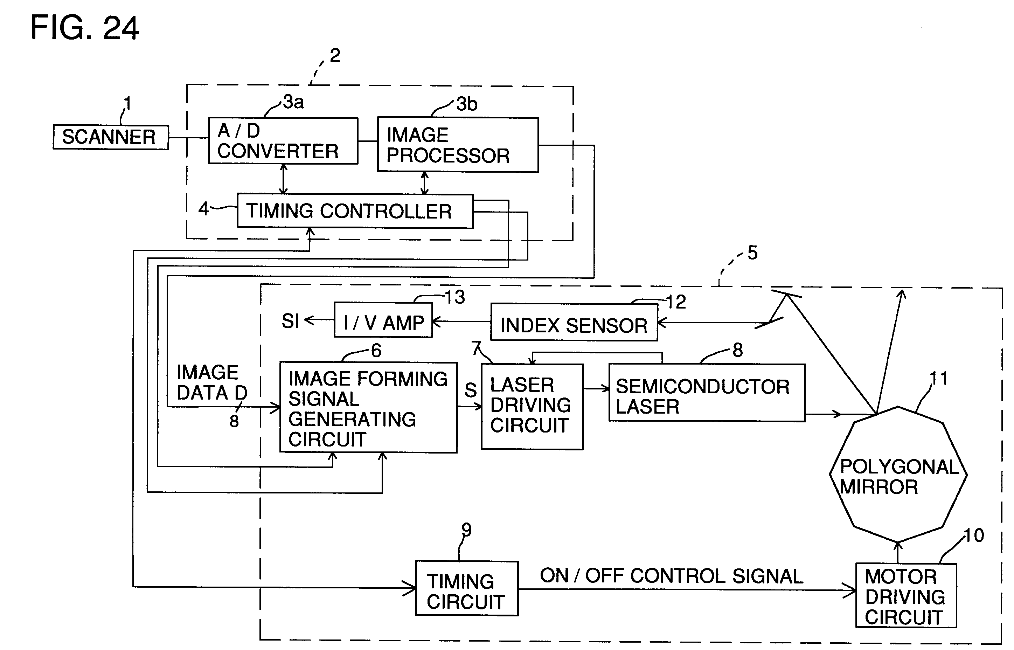

Fig. 24 is a schematic illustration showing the structure of the essential portion of a digital copier (in which a laser beam is utilized) to which the present invention is applied.

The scanner 1 obtains image information from an object to be copied. The obtained information is AD-converted and processed in the image processing section 2, and then the information is subjected to shading correction and others. The timing controller 4 sends the data to the printer 5 in synchronization with the image data transmission clock.

In the printer 5, the image formation signal generator 6 generates an image formation signal S (a signal for reproduction of gradation by a PWM pulse) in accordance with inputted image data D (8 bit data). In accordance with the information of this PWM pulse, the laser drive circuit 7 drives the semiconductor laser 8. A scanning operation is conducted on the laser beam by the polygonal mirror 11. Due to the scanning operation, an electrostatic latent image is formed on the photoreceptor drum. Numeral 9 is a timing circuit, numeral 19 is a motor drive circuit, numeral 12 is an index sensor, and numeral 13 is an I/V amplifier.

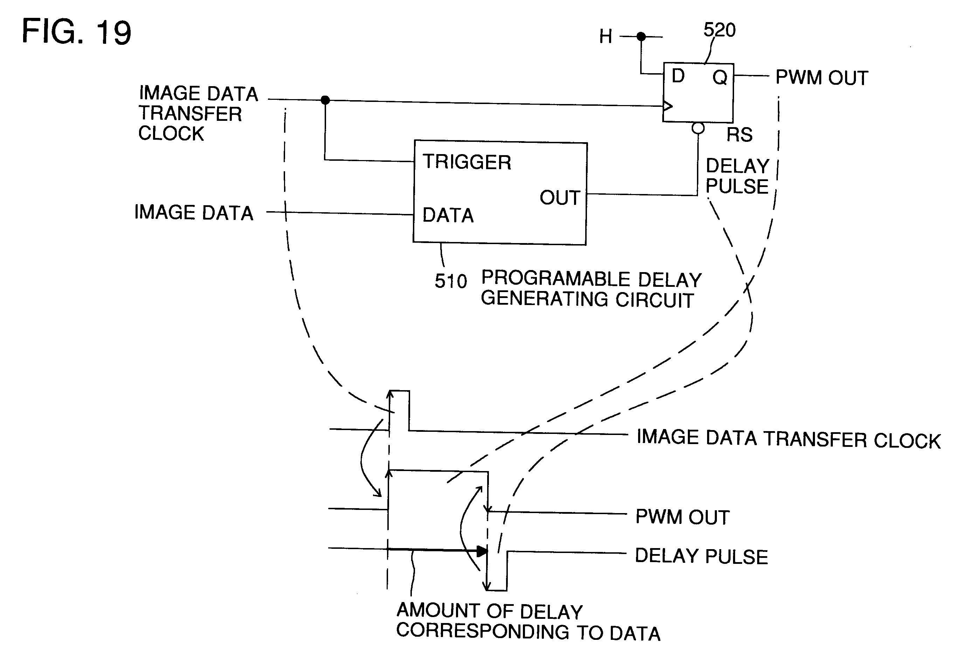

The present invention is applied to the PWM pulse generation circuit for reproduction of gradation provided in the image formation signal generation circuit 6 shown in Fig. 19.

[Example 2]

Fig. 19 is a schematic illustration showing the structure of the second example of the present invention. This example includes a digital programmable delay generator 510 and a D-type flip flop 520, and a PWM pulse (PWM OUT) for reproduction of gradation having a pulse width corresponding to the input image data is generated in this example. The trigger input of the digital programmable delay generator 510 is the image data transmission clock, and the data input is the image data of 8 bits.

The data input terminal of the D type flip flop 520 is always pulled up to a high level. Also, the image data transmission clock is inputted into the clock terminal of the flip flop 520, and the flip flop 520 is reset by a delay pulse that is the output of the digital programmable delay generator 510.

As shown by the waveform located in the lower portion of Fig. 19, in this example, the output of the D type flip flop 520 is raised up to a high level by the positive edge of the image transmission clock. After the output has been delayed in accordance with the image data, the D type flip flop 520 is reset by the positive edge of the delay pulse of the digital programmable delay generator 510 so that the output of the D type flip flop 520 is returned to a low level. As a result of the foregoing, a pulse width signal (PWM OUT) is generated in accordance with the image data information.

In this example, a reset pulse to determine the pulse width is generated by the digital programmable delay generator 510 that can change the delay amount in accordance with the input digital data. Therefore, an externally provided analog circuit, which is susceptible to the influence of peripheral circuits, can be eliminated. For that reason, highly accurate PWM pulses can be generated without being affected by noise. Further, only the image data and its transmission clock are used for the signal inputted into the circuit, and it is not necessary to use other control signals, so that the structure can be simplified. Consequently, the area on the system board occupied by the circuit can be reduced.

[Example 3]

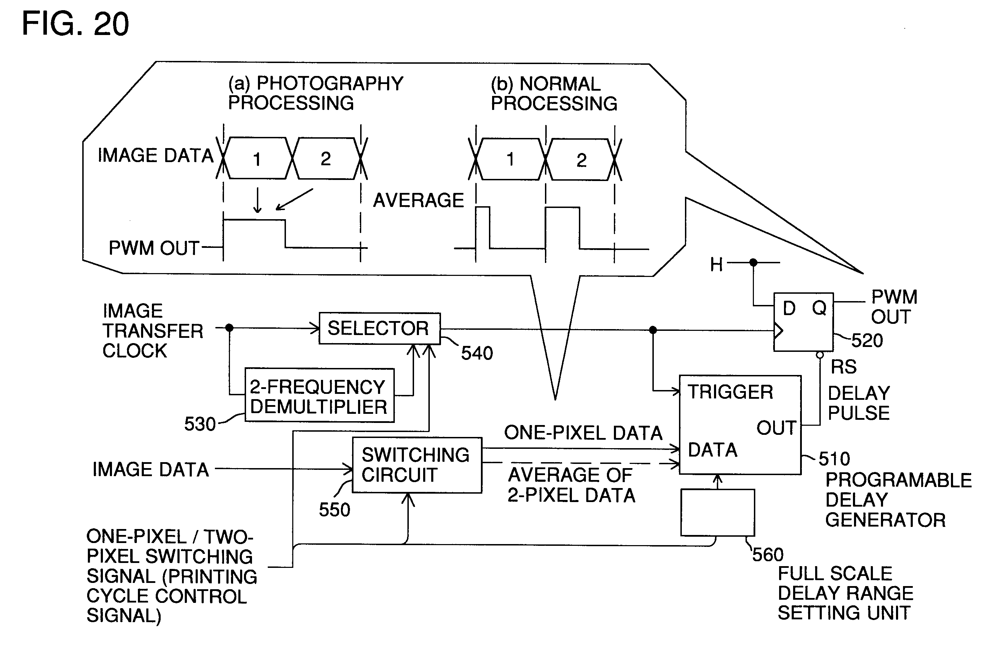

Fig. 20 is a schematic illustration showing the structure of the third example of the present invention. Although the basic structure of this example is the same as that of the example explained before, the 2-frequency demultiplier 530, selector 540 and switching circuit 550 are added to this third example.

In the case where a photograph, the entire contrast of which is low being different from a character image of which contrast is high, image quality can be enhanced when the gradation reproduction accuracy is improved by generating one PWM pulse while pieces of information of a plurality of adjacent pixels are averaged even if the resolution is deteriorated, rather than processing is conducted for each pixel. In this example, the function of the aforementioned example can be applied even in the case where a plurality of pixels are processed in a lump. In this example, the circuit is structured so that processing can be carried out for each 2 pixels.

Concerning the image transmission clock, the clock of one pixel period and the cycle dividing clock sent from the 2-frequency demultiplying circuit 530 can be selected by the selector 540. Concerning the image data, the data for each pixel and the average of the data of 2 pixels can be selected and outputted by the selecting circuit 550. The maximum delay amount of the digital programmable delay generator 510 can be changed into the delay scale of 2 pixels by the full scale delay range setting unit 560. The aforementioned signal selection control is carried out in accordance with the selection control signal (the printing period control signal) that is changed over between one and two pixels.

According to this example, when a minimized circuit is added, the example can be applied to a case in which data processing is carried out over a plurality pixels. Therefore, the following effects can be provided: an accurate PWM pulse is generated without being affected by noise; and the gradation is reproduced corresponding to the object to be copied.

[Example 4]

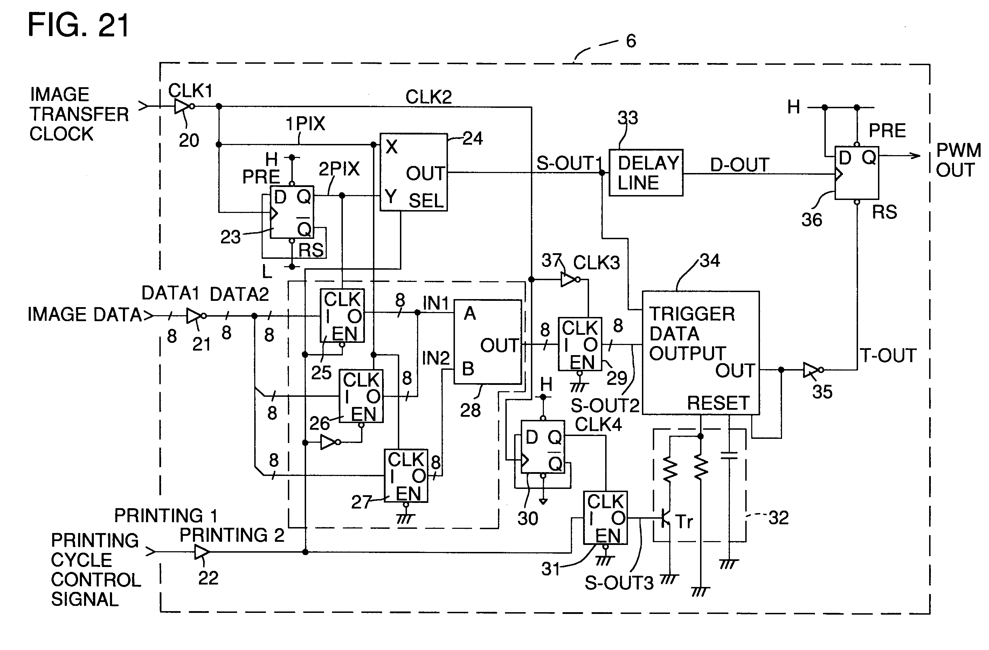

Fig. 21 is a block diagram showing an example of the structure in which the example shown in Fig. 20 is further specified. In the drawing, numeral 20 is an inverter, numerals 21 and 22 are input buffer, numeral 23 is a 2-frequency demultiplier circuit, and numeral 24 is a multiplexer for changing over between a clock at one pixel and a clock at each two pixels. The latches 25, 26 and 27 having enabling terminals, and the data adder 28 compose a data changeover circuit (corresponding to the circuit 550 shown in Fig. 20).

Numerals 29, 30 and 31 denote latches for adjusting the timing used for synchronizing the image data with the full scale delay range setting signal. The delay line 33 is provided for adjusting the input timing to the D-type flip flop 36 of the image transmission clock, giving consideration to the fixed delay amount of the programmable delay generator 34 and the fixed delay amount of the inverter 35.

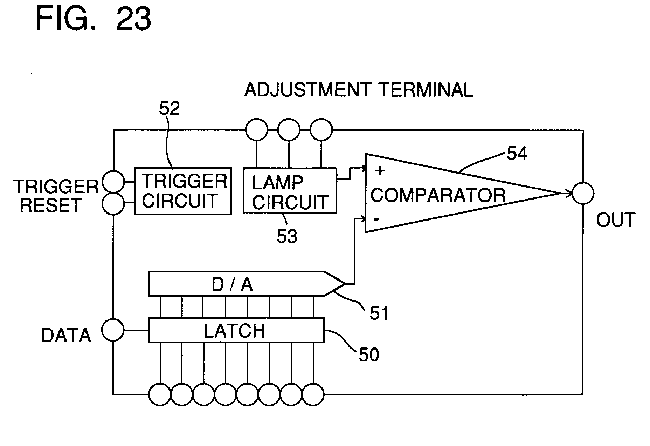

The digital programmable delay generator 34 is structured in the manner shown in Fig. 23.

As shown in the drawing, the digital programmable delay generator 34 includes the digital data latch 50 of 8 bits, D/A converter 51, trigger circuit 52, lamp circuit 53 and comparator 54, and these components are integrated into one chip (IC). As shown in Fig. 21, the adjusting terminal of the lamp circuit 53 is connected with the full scale delay range setting device (including a transistor $T_r$ for selecting a time constant, parallel resistances, and condensers) 32.

In this example, image data is carried out for each two pixels and also for each one pixel in the following manner: one of the latches 25 and 26 is selected; the output data of the selected latch is added to the output data of the latch 27 that is always used (adder 28); and the added output is made to be 1/2. When the added data is made to be 1/2, a particular circuit is not used but conducted in the following manner: in the case where data is inputted into the trigger terminal of the digital programmable delay generator 34, the input bit is shifted by one bit.

That is, one of the data changeover circuits 25 and 26 is compensationally becomes active in accordance with the level of the printing period control signal (printing 2). The latch 27 is always operated. The operational clock of the latch 25 is an image transmission clock (1PIX) for each one pixel, and the operational clock of the latch 26 is an image transmission clock (2PIX) for each two pixels. When image processing is carried out for each one pixel, the latch 26 is operated, and when image processing is carried out for each two pixels, the latch 25 is operated. Consequently, in the case where image processing is carried out for each one pixel, the data of the latch 26 and that of the latch 27 are added and made to be 1/2. As a result, the data of one pixel $\{(1 + 1)/2 = 1\}$ is inputted into the digital programmable delay generator 34 as it is. In the case where image processing is carried out for each two pixels, the data of latch 25 (the data of two pixels) and that of the latch 27 (the data of one pixel) are added and made to be 1/2. As a result, the average value of the data of two pixels $\{(2 + 1)/2 = 1.5\}$ is inputted into the programmable delay generator 34.

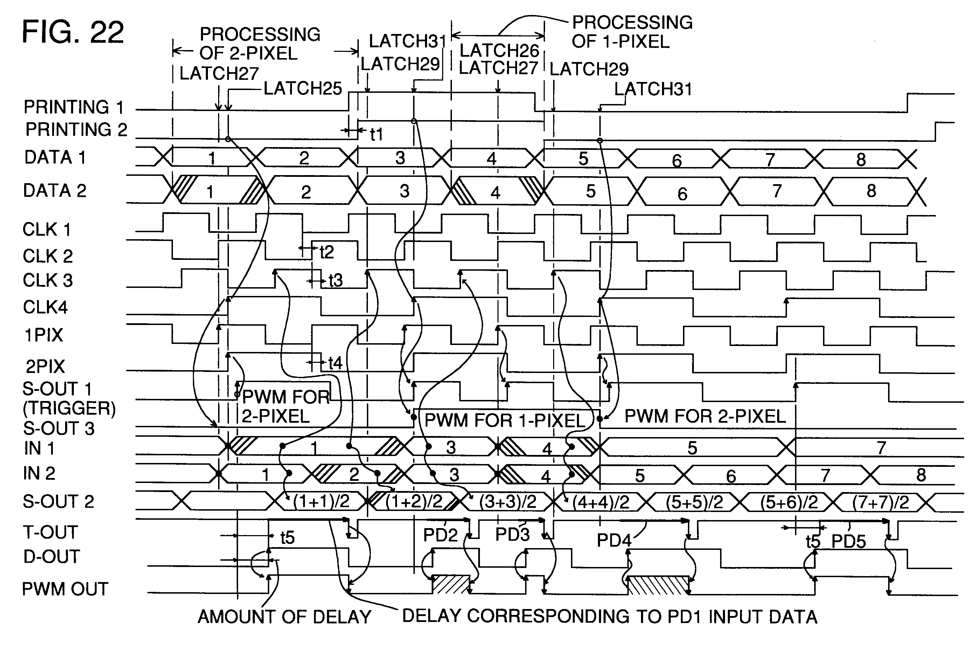

Fig. 22 is a timing chart for explaining the operation of this example. The reference characters shown in Fig. 22 denote the following signals.

Printing 1: printing period control signal

Printing 2: printing period control signal that has passed through the buffer 22

DATA 1: digital image data

DATA 2: digital image data that has passed through the buffer 21

CLK 1: image transmission clock

CLK 2: image transmission clock provided when CLK 1 is inverted by the inverter 20

CLK 3: image transmission clock provided when CLK 2 is inverted by the inverter 37

CLK 4: image transmission clock provided when CLK 2 is divided with the D-type flip flop 30

1PIX: clock for arithmetic processing for each one pixel

2PIX: clock for arithmetic processing for each two pixels

S-OUT 1: image transmission clock selected by the multiplexer 24 in accordance with the printing period control signal (printing 2)

S-OUT 2: digital addition image data provided when the image data added by the adder 28 is latched with the image transfer clock (CLK 3)

S-OUT 3: printing period control signal latched by the image transmission clock (CLK 2) in the latch 31

IN1: digital image data of one of the latches 25 and 26 selected by the printing period control signal (printing 2) with respect to the image data (DATA 2) of the latches 25 and 26 that have been respectively latched by the arithmetic processing clocks (1PIX) and (2PIX)

IN2: image data of latch 27 latched by the clock (1PIX) for arithmetic processing for use in one pixel processing

T-OUT: signal provided when a delay pulse outputted from the programmable delay generator 34 is inverted by the inverter 35

D-OUT: signal provided when an image transmission clock (S-OUT 1) is delayed by the delay line 33

PWM OUT: PWM signal generated to drive the laser beam source

t1 to t5: delay amount peculiar to an element

delay amount: delay amount of the delay line 33

PD 1 to PD 5: delay amount corresponding to input data

In the timing chart shown in Fig. 22, in the case where S-OUT 3 is on a low level, the full scale delay range of the digital programmable delay generator 34 is changed over to a value suited to generate a PWM pulse for each 2 pixels. In the case where S-OUT 3 is on a high level, the full scale delay range of the digital programmable delay generator 34 becomes a value suited to generate a PWM pulse for each one

EP 0 564 868 A2

pixel.

When the positive edge of D-OUT is inputted, the output of the D-type flip flop 36 is raised to a high level, and when the negative edge of the delay pulse corresponding to the image data of T-OUT is inputted, the output is lowered to a low level. As a result of the foregoing, delay amounts PD 1 to PD 5 are generated in accordance with the input data.

The changeover operation between a series of processing for each two pixels and a series of processing for each one pixel is systematically conducted when the level of printing control signal (printing 2) is changed over.

This example is composed of an essential digital circuit including a multiplexer, adder and a plurality of latches, so that the structure is simple and the circuit can be structured of ICs, which can be easily realized.

As explained in Examples 2, 3 and 4, the following effects can be provided by the present invention.

(1) Since a PWM pulse to reproduce the gradation is generated by the digital programmable delay generator, an analog circuit provided outside that is susceptible to the influence of peripheral circuits is not necessary. Therefore, an accurate PWM pulse can be stably generated.

(2) The circuit structure of the present invention is very simple so that the analog circuit provided outside can be eliminated, and further it is easy to design a system board.

(3) In the case where it is necessary to carry out data processing over a plurality of pixels, for example, in the case where a photographic image is copied, the passage of image transmission clock and the passage of image data are automatically changed over when the printing period is changed over, so that the processing can be appropriately carried out for a reproduced image. As a result of the foregoing, an accurate PWM pulse can be generated without being affected by noise. Further, the gradation can be reproduced in accordance with an object to be copied. The aforementioned additional function can be realized by a minimized circuit.

(4) Therefore, the gradation reproduction function of an image forming apparatus can be improved.

[Example 5]

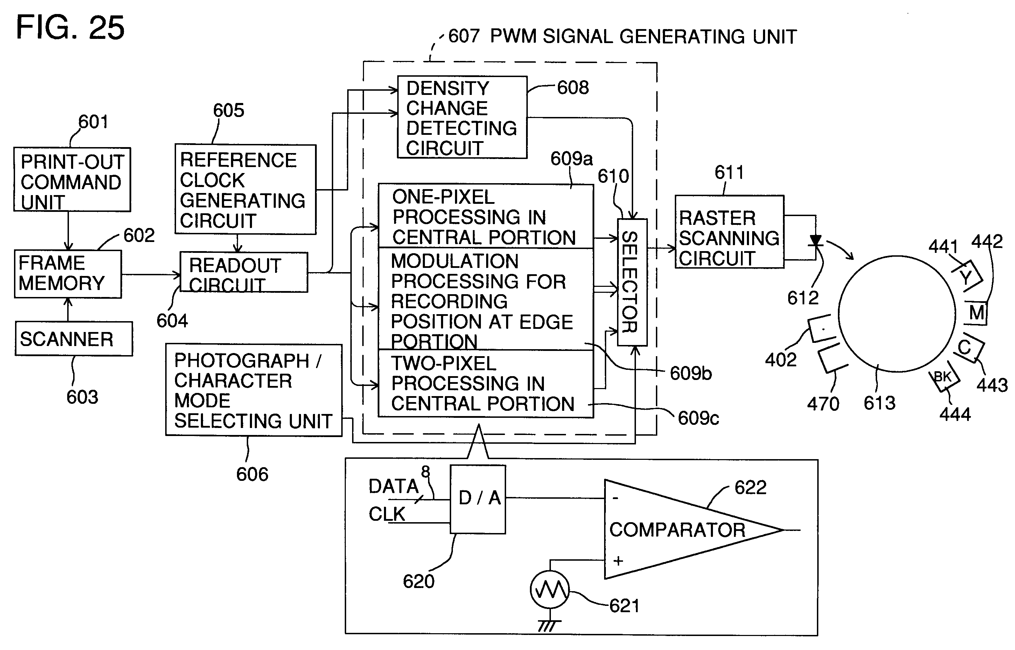

Fig. 25 is a schematic illustration showing the structure of the fifth example of the present invention.

This example shows a gradation reproduction apparatus operated in accordance with a PWM signal, wherein the gradation reproduction apparatus can be applied to a digital color copier by which a document image is read, and also can be applied to a printer connected with a computer to which the image data is supplied from a data source.

Image data is supplied by the print-out command unit 601. A document image is read by the scanner 603. Image data is temporarily stored in the frame memory 602. Then, the stored data is read out by the readout circuit 604 in synchronization with a reference clock supplied from the reference clock generating circuit 605.

The PWM signal generating unit 607 generates a pulse width signal to control the light emitting time of the laser diode 612. The PWM signal generating unit 607 includes the density change detecting circuit 608 to detect the density change of an image, a plurality of kinds of PWM signal making and processing units 609 (one-pixel processing unit 609a in central portion, modulation processing unit 609b for recording position at edge portion, and two-pixel processing unit 609c in central portion), and the selector 610 that selectively outputs a necessary PWM signal.

As shown in the lower portion of Fig. 25, the plurality of kinds of PWM signal making and processing units 609 essentially includes the D/A converter 620, triangular wave (reference wave) generating circuit 621, and analog comparator 622.

Information to be selected by the selector 610 is given to the selector 610 by the density change detecting circuit 608 and the photograph/character mode selecting circuit 606. In the case where a step-like density change is detected by the density change detecting circuit 608, a PWM signal sent from the modulation processing unit 609b for recording position at edge portion is selected and outputted, so that recording position modulation is realized for emphasizing the edge portions. In the case where a character mode is selected by the photograph/character mode selecting circuit 606, gradation reproduction of high resolution is carried out with respect to the image center by a PWM signal through one pixel processing (that is, the PWM signal sent from 609b is selected). In the case where a photographic mode is selected, reproduction of high gradation is carried out with respect to the image center by a PWM signal corresponding to two-pixel processing (that is, the PWM signal sent from 609c is selected).

The laser diode 612 is driven and scanned by the raster scanning circuit 611, so that an electrostatic latent image is formed on the surface of the photoreceptor drum 613. Image formation is achieved when the following operations are repeated: a charging operation conducted by the charger 402, an image exposing

18

operation conducted by the laser diode 612, and a developing operation conducted by one of the color developing units 441 to 444. In this way, 4 color toner images are superimposed, and then the superimposed images are transferred. After transfer, the residual toner on the photoreceptor is removed by the cleaning means 470.

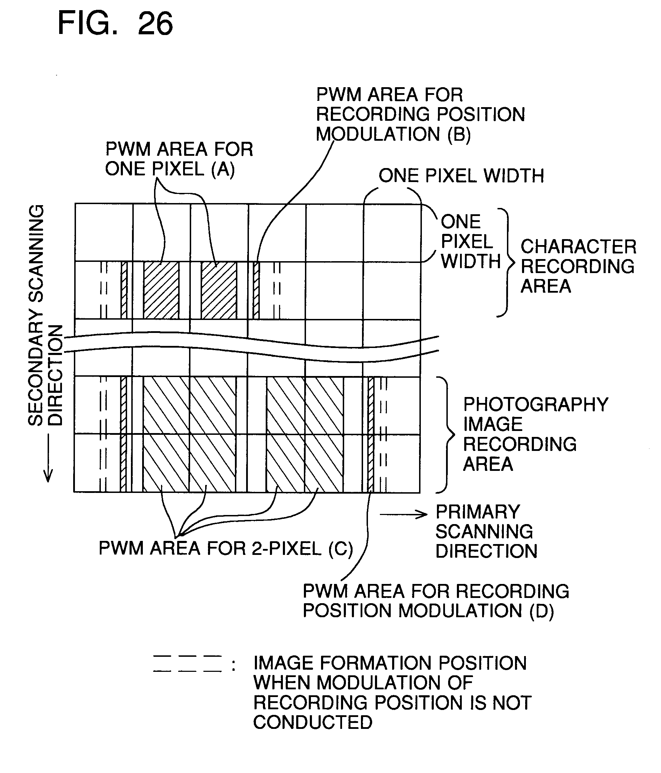

Fig. 26 is a schematic illustration for explaining the effects of this example, that is, Fig. 26 is a view showing a model of the circumstances in which an electrostatic latent image is formed on the surface of the photoreceptor drum 613. In the drawing, the upper half portion is a character recording region, and the lower half portion is a photographic image recording region. In the character recording region, recording of high resolution is conducted by one pixel PWM in the center (region A) of a character. In the right and left edge portions (region B), the recording position is shifted laterally (that is, the recording position is shifted from the position shown by a broken line to the hatched region), so that the occurrence of white spots is prevented and the sharpness is improved.

In the photographic image recording region, recording is conducted by a PWM signal over two pixels in the image center (that is, in the half-tone region C of the image), so that the image is provided with high gradation. In the edge portion of the image (that is, in a region D in which a step-like density change exists in some portions), recording position modulation is conducted in the same manner as in the character recording region, so that the contrast of density is emphasized. As described above, consideration is given to the entire characteristics of the image and also to the local change of density, so that processing is finely carried out to provide an image of high quality.

[Example 6]

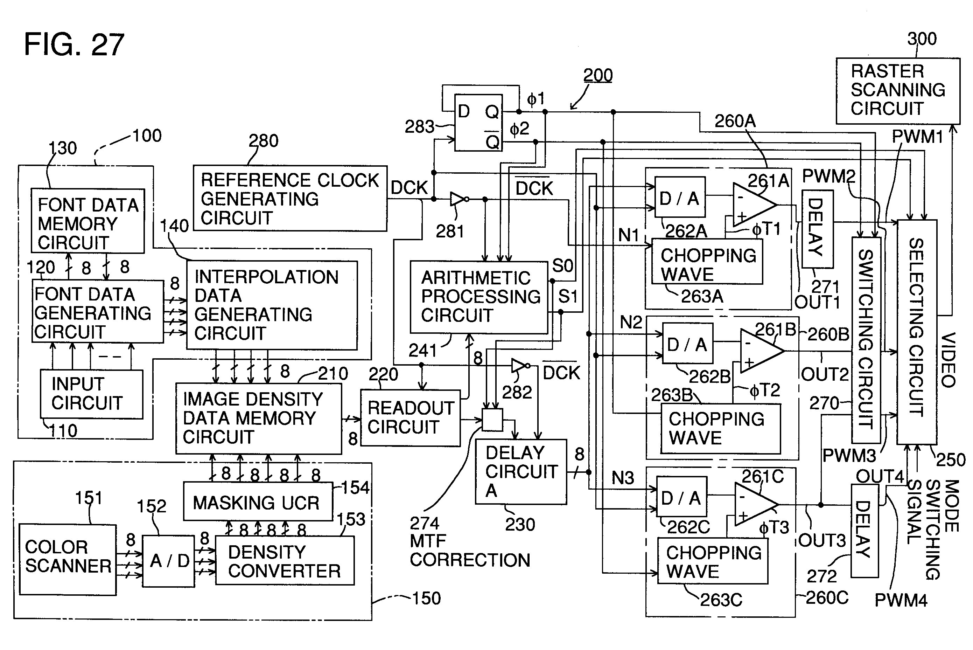

Fig. 27 is a view showing the structure of the sixth example of the present invention. Numeral 100 corresponds to the print-out command unit 601 shown in Fig. 25, and numeral 150 corresponds to the scanner 603 in Fig. 25. Numeral 210 is a frame memory, numeral 200 is a reading circuit, numeral 280 is a reference clock generating circuit, and numeral 241 is an arithmetic circuit to detect the density change by taking the difference of pixel density. Numeral 283 is a 2-frequency demultiplier circuit of the reference clock, and numeral 230 is a delay circuit for adjusting the timing.

Numerals 260A, 260B and 260C and the switching circuit 270 compose various PWM signal generating circuits corresponding to 609a to 609c in Fig. 25. Numerals 271 and 272 are delay circuits for adjusting the timing, and the selecting circuit 250 corresponds to the selector 610 shown in Fig. 25.

Switching signals $S_0$ and $S_1$ are supplied to the selecting circuit 250 from the arithmetic circuit 241. Also, a mode switching signal for switching between the photographic mode and the character mode is supplied to the selecting circuit 250 from the outside of the circuit. The selecting circuit 250 selects and outputs one of the signals PWM1 (or PWM4), PWM2 and PWM3 in accordance with the switching signals S0 and S1 sent from the arithmetic circuit 241. One of PWM1 and PWM4 is selected and outputted in accordance with the character mode or the photographic mode switched by a mode switching signal.

In this case, PWM1 is a pulse width signal for each pixel for use in the image center that is outputted from the PWM signal generating circuit 260A, and PWM2 and PWM3 are pulse width signals for recording position modulation at the edge portion that are outputted from the switching circuit 270. PWM4 is a pulse width signal over 2 pixels for a half-tone portion of a photographic image. PWM2 and PWM3 for recording position modulation are pulse width signals having a period corresponding to 2 pixel data, the phases of which are different from each other by 180°. One of PWM2 and PWM3 is appropriately selected by the switching circuit 250 in accordance with the recording position that is shifted to the right or the left.

Numeral 300 is a raster scanning circuit.

In this example, in order to improve the sharpness of an image, the MTF correcting circuit 274 is provided to the output section of the reading circuit 220. Also, in order to improve the gradation property, a $\gamma$ converting circuit is provided immediately before the D/A converting sections 262A to 262C (although the $\gamma$ converting circuit is not shown in the drawing). These circuits are changed over in accordance with the result of image density discrimination conducted by the arithmetic circuit 241 so that the gradation property of a recorded image can be guaranteed. In this way, the sharpness and the gradation property can be further improved.

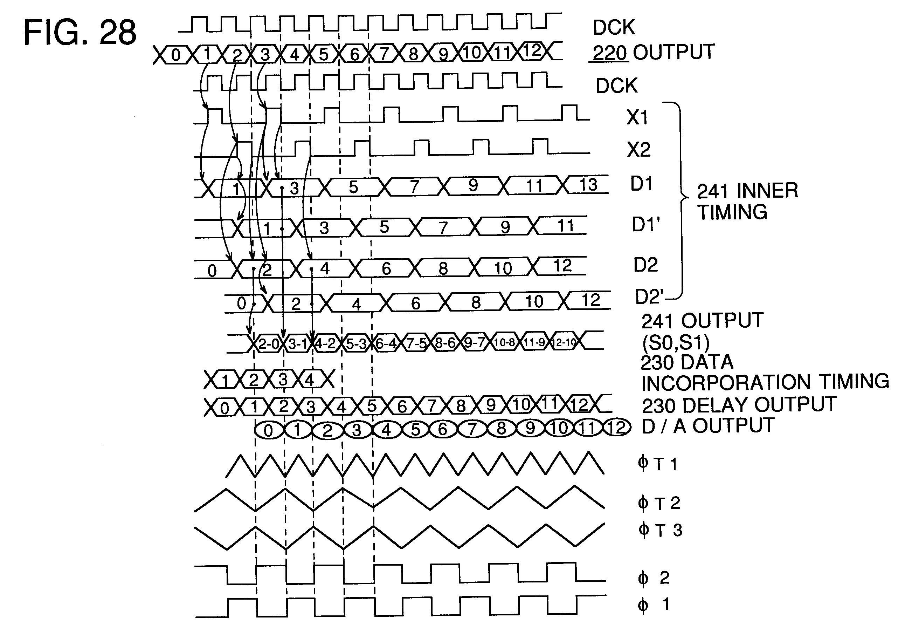

Fig. 28 is a timing chart showing an example of the operation of this example. The arithmetic circuit 241 takes the continuously inputted image density data of a unit of one scanning line in synchronization with the rising clock, and difference calculation is successively executed between the pixel data immediately before and after the image data to be recorded. This difference calculation is conducted in the following manner: the pixel data recorded immediately before is subtracted from the pixel data that immediately follows the image data to be recorded. The arithmetic circuit 241 is operated in the following manner: the difference value is compared with a specific value $\alpha$; in the case where the difference value is not less than $\alpha$, the switching output S0 is made to be "1"; in the case where the difference value is smaller than -$\alpha$, the switching output S1 is made to be "1"; and in the case of -$\alpha \leq$ difference value $\leq \alpha$, both S0 and S1 are made to be "0". That is, in the case where S0 is "1", the density of the pixel recorded immediately after is higher than that of the pixel recorded immediately before. In the case where S1 is "1", the density of the pixel recorded immediately before is higher. Both S0 and S1 are "0", the density change is small. These switching signals S0 and S1 are supplied to the selecting circuit 250, and a PWM signal is selected in accordance with the information of the signal as described above.

$\Phi$T1, $\Phi$T2 and $\Phi$T3 are respectively the outputs of the triangular wave generators 262A, 263B and 263C in the PWM signal generators 260A, 260B and 260C shown in Fig. 27.

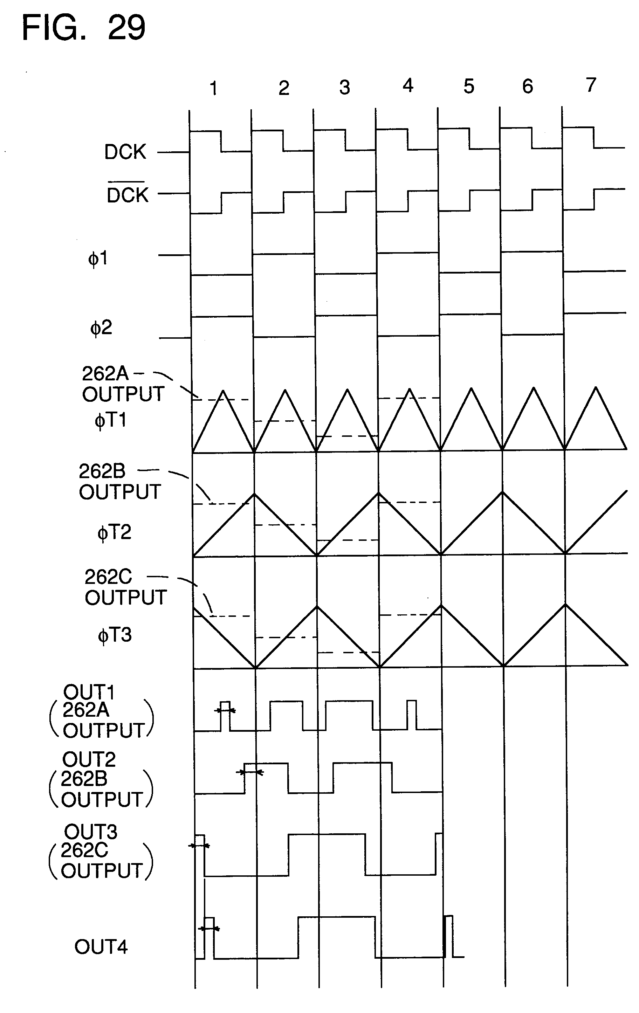

Fig. 29 is a schematic illustration showing the circumstances of the generation of PWM signals in this example. OUT1, OUT2 and OUT3 shown in the lower portion of the drawing are respectively the outputs of 260A, 260B and 260C, which are PWM signals that have not been delayed. OUT4 is a PWM signal delayed by the delay circuit 272, wherein OUT4 is the aforementioned PWM4.

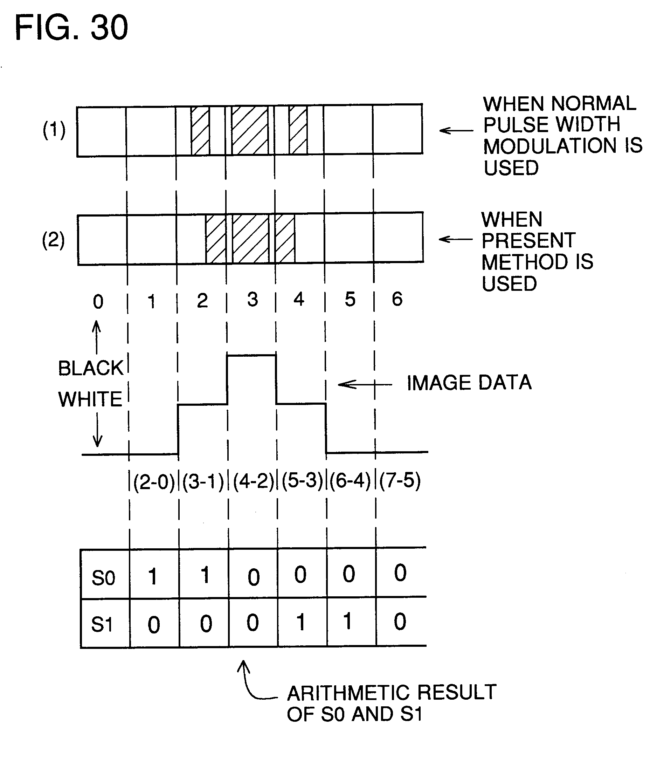

Fig. 30 is a schematic illustration showing an example of the latent image forming position on the photoreceptor in the case where recording position modulation is carried out using the PWM signals (OUT1, OUT2 and OUT3, that is, PWM1, PWM2 and PWM3) shown in Fig. 29. As shown in the drawing, when the recording position is corrected in accordance with switching signals S0 and S1, the formation positions of the pixels 2 and 4 are shifted to the side of the pixel 3, so that a sharp image in which white spots are reduced can be formed. In this case, (2) shows this example, and (1) shows a comparative example in which an ordinary pulse width modulation is carried out.

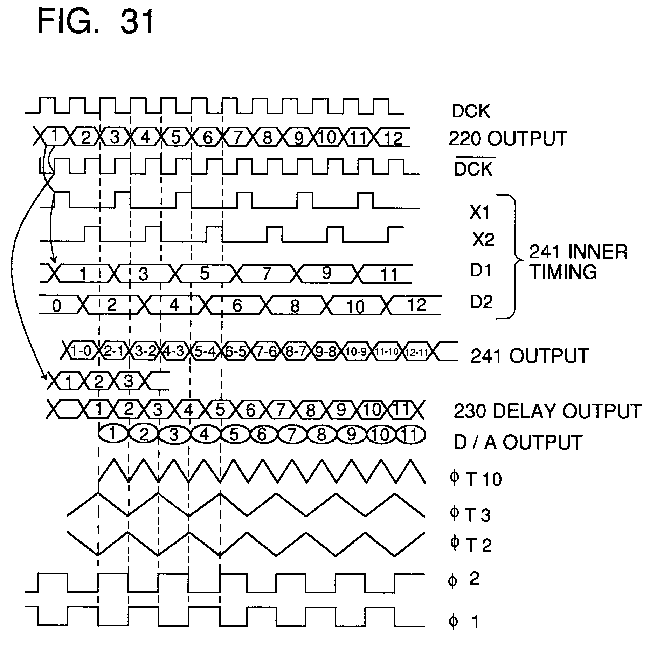

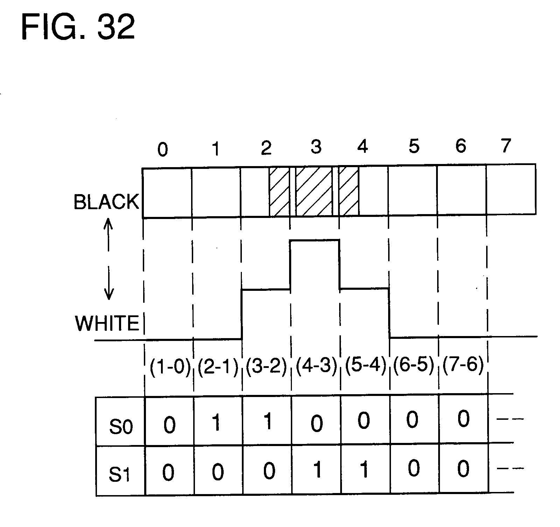

Fig. 31 is a timing chart in the case where a difference calculation method is adopted for the density change detection in the calculation circuit 241 shown in Fig. 27, wherein the difference between the objective pixel and the pixel immediately before the objective pixel is taken in the difference calculation method. Fig. 32 is a view showing the effects of recording position modulation in that case. It can be understood that a sharp image formation can be carried out in the same manner as the cases shown in Figs. 28 and 30.

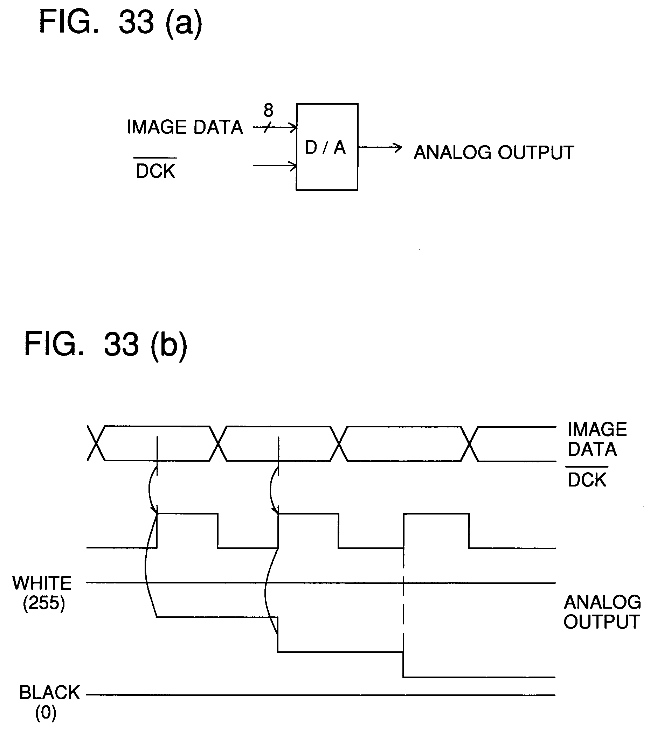

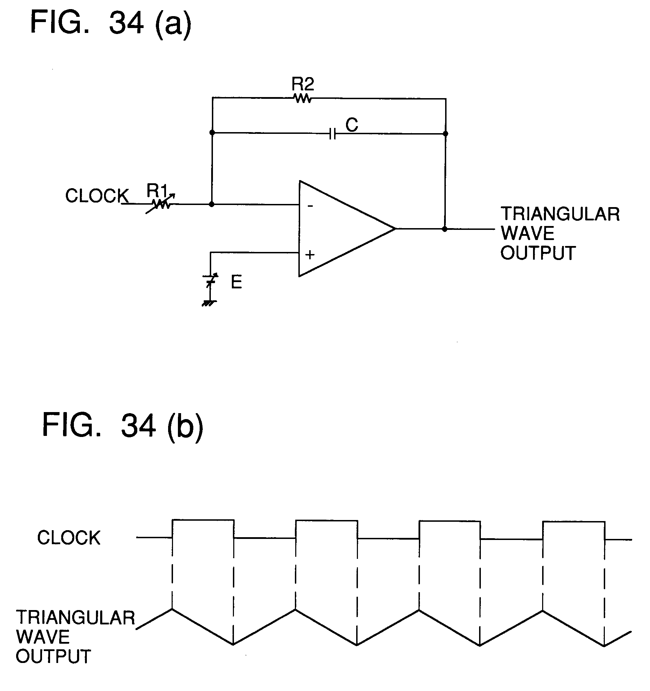

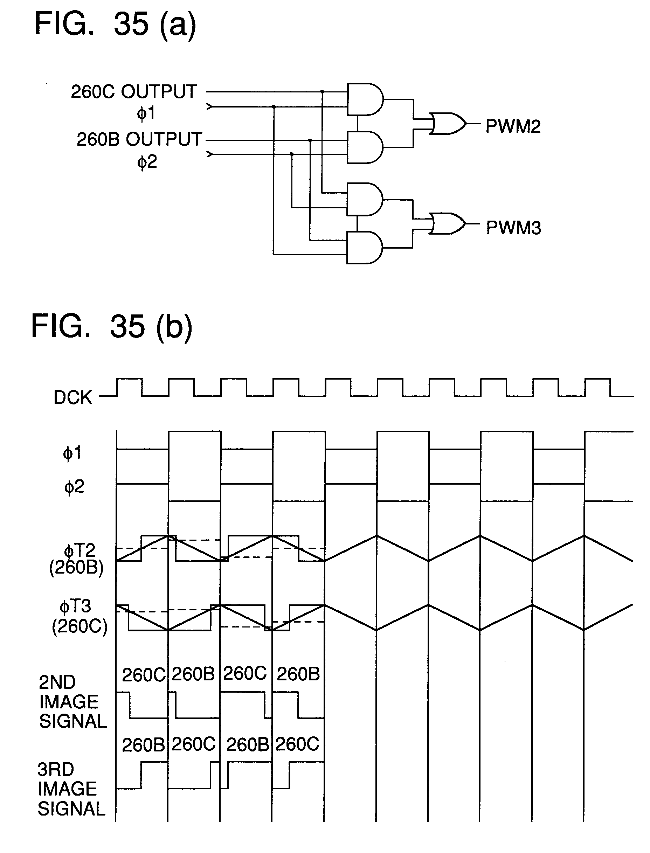

Figs. 33(a) and 33(b) are schematic illustrations respectively showing the structure and operation of the D/A converters 262A, 262B and 262C shown in Fig. 27. Figs. 34(a) and 34(b) are schematic illustrations respectively showing the structure and operation of the triangular wave generation circuits 263A, 263B and 263C shown in Fig. 27. Figs. 35(a) and 35(b) are schematic illustrations respectively showing the structure and operation of the switching circuit 270 shown in Fig. 27.

[Example 7]

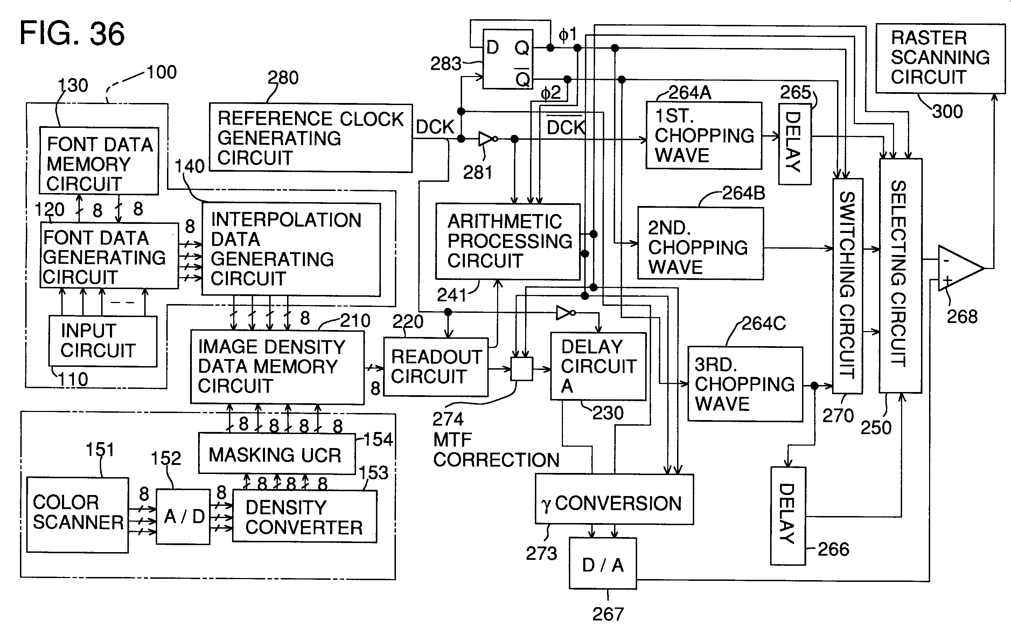

Fig. 36 is a schematic illustration showing the structure of the seventh example of the present invention. Although the fundamental function of this example is the same as that of the example shown in Fig. 27, the following point is different: in this example, a triangular wave is selected by the selecting circuit 250; and a PWM signal is finally generated by the analog comparator 268 (in the case shown in Fig. 27, a plurality of kinds of PWM signals are generated, and one of them is selected by the selecting circuit). A selector signal to select a reference wave in accordance with the result of image discrimination is inputted into the $\gamma$ converting circuit 273, and the gradation property is corrected using a corresponding $\gamma$ correcting table. According to this example, the number of comparators to generate PWM signals is only one, so that the circuit can be simplified.

The present invention is explained above with reference to the fifth, sixth and seventh examples. It should be understood that the present invention is not limited to the specific examples, and it is possible to adopt a variation and application. For example, in the example shown in Fig. 25, the selecting circuit 606 is used for the selection of the photographic and character modes. However, the following structure may be employed: the density distribution pattern information taking function is added to the density change detection circuit 608; according to the result of the comparison between the pattern information and the table, the character and photographic regions are separated in accordance with the change of the density distribution in real time in the process of recording; and a switching operation is conducted between one and two pixel PWM signals.

In the same manner, recording position modulation may be conducted in accordance with two dimensional density distribution information of the adjacent pixels in which the auxiliary scanning direction is considered. Also, tables may be prepared respectively corresponding to photographic and character images, and in accordance with the result of discrimination between photographic and character images, an amount of shift of recording position may be changed over so that the amount is small in the photographic

EP 0 564 868 A2

region and the amount is large in the character region. The reason why the aforementioned operation is conducted is as follows: the image quality is deteriorated when the contrast is too high in the case of a photographic image. When the changeover operation is carried out in the aforementioned manner, characters of a sharp contour can be reproduced, and appropriate contrast of a photographic image can be realized.

As explained above, the following effects can be provided by the present invention:

(1) With respect to an image of high contrast, image processing is carried out for each pixel, so that a PWM signal corresponding to each pixel is generated to record the image. With respect to an image of low contrast, a PWM signal for each pixel is generated by image processing conducted over not less than 2 pixels, and recording is carried out with this PWM signal, and recording position correction (recording position modulation) is uniformly conducted on the edge portion. In this way, the image quality can be entirely improved, and also the sharpness of edge portions can be improved. That is, while consideration is given to the characteristics of the entire image and also given to a local change in contrast, image reproduction processing is finely conducted so that the image quality can be improved.

(2) The PWM generating section for the reproduction of gradation is essentially structured from making a comparison between a normal signal and a reference wave, and further one of the second and third reference waves is used for recording position modulation, and also used for processing conducted over not less than 2 pixels of a photographic image. In this way the reference waves are effectively used so as to simplify the structure.

(3) As described above, the image quality of the image forming apparatus can be improved, and high function can be provided.


**Claims**

1. An image forming apparatus comprising:

    (a) modulation means for generating a pulse width modulation signal in accordance with density data of an image, and for displacing a pulse position of the pulse width modulation signal corresponding to density distribution in an objective pixel calculated from the density of the objective pixel and that of the adjacent pixel; and

    (b) means for recording the image in accordance with the pulse width modulation signal.


2. The image forming apparatus of claim 1, wherein said modulation means comprises a pulse start and end data generating circuit, at least one programmable delay generator and a D-type flip-flop.


3. An image forming apparatus in which gradation of an image is reproduced by controlling duration of light emission, comprising:

    (a) a programmable delay generating means by which an amount of delay corresponding to image data is controlled; and

    (b) means for generating an image data transmitting clock, wherein an image data transmitting clock generated is inputted to said programmable delay generating means and by which a transmitting clock having an amount of delay corresponding to image data is obtained so that a signal having a pulse width corresponding to the image data utilizing the delayed transmitting clock and the transmitting clock before delaying.


4. The image forming apparatus of claim 3 further comprising a frequency demultiplier for demultiplying a frequency of an image data transmitting clock so that a plurality of image data are included in one cycle of a clock signal inputted to said programmable delay generating means, a circuit for switching a maximum amount of delay generated by said programmable delay generating means in accordance with an amount of demultiplying frequency of said frequency demultiplier, wherein the image data inputted to said programmable delay generating means are composed of a plurality of image data contained in one cycle of the frequency demultiplied transmitting clock.


5. An image forming apparatus in which a pulse width modulating signal corresponding to an image data is generated and gradation of an image is reproduced by controlling duration of light emission according to the pulse width modulating signal, comprising:

    (a) means for processing the image data of at least two pixels in the inner portion of the image, one pulse width modulating signal covering the processed image data thereby being generated;

21

(b) means for altering an image forming position at an edge portion of the image by outputting a pulse width modulating signal in a different timing from the image forming in the inner portion of the image so that the image forming position is shifted toward the inner side of the image when image processing is carried out for each pixel, a pulse width modulating signal corresponding to each pixel thereby being generated for image forming of an edge portion of the image.

6. An image forming apparatus in which a pulse width modulating signal corresponding to image data is generated and gradation of an image is reproduced by controlling duration of light emission according to the pulse width modulating signal, comprising:

(a) switching means for switching between a character image mode and a photographic image mode;

(b) data processing means for switching image processing between one pixel and at least two pixels of the image data in the inner portion of the image corresponding to switching between the character image mode and the photographic image mode, and for generating respectively a pulse width modulating signal corresponding to each pixel and a pulse width modulating signal corresponding to at least two pixels; and

(c) means for altering an image forming position at an edge portion of the image by outputting a pulse width modulating signal in a different timing from the image forming in the inner portion of the image, the image forming position being thereby shifted toward the inner side of the image when image forming of an edge portion of the image is carried out.

7. The image forming apparatus of claim 6, wherein the pulse width modulating signal corresponding to the image data is generated through modulating image density data by a reference signal which includes at least a first triangular wave having a first cycle corresponding to a data period of one pixel, a second triangular wave having a second cycle corresponding to a data period of a plurality of pixels and a third triangular wave having the second cycle and a phase difference of 180° from the second triangular wave, wherein

said data processing means generates a pulse width modulating signal for the character image mode by processing each pixel data using the first triangular wave, generates a pulse width modulating signal for the photographic image mode through processing data of a plurality of pixels using one of the first triangular wave and the third triangular wave,

said altering means generating a pulse width modulating signal for image forming at edge portion irrespective of either the character image mode or the photographic image mode using the combination of the second and the third triangular waves.

EP 0 564 868 A2

FIG. 1

23

# FIG. 2

IMAGE CLOCK — Ic

PROGRAMABLE TRIGGER DELAY GENERATING CIRCUIT A — 260, 262
RESET

PROGRAMABLE TRIGGER DELAY GENERATING CIRCUIT B — 263
RESET

D-TYPE FLIP-FLOP — 264

OUTPUT TERMINAL

+5V   +5V

D   Q
Q̄

t1   t2

R1   R2   c
R3   Tr1
R4   Tr2

IMAGE DISCRIMINATING SIGNAL — Ih

PULSE STARTING / ENDING DATA GENERATING CIRCUIT — 261

RECORDING POSITION DATA — Ik

DENSITY DATA — Id

8   8

EP 0 564 868 A2

# FIG. 3 (a)

START

STEP 1
INPUT RECORDING
POSITION DATA(K) AND
DENSITY DATA(D)

STEP 2
K = 128 ?
NO
YES

STEP 3
$\frac{D}{2} \geqq 255 - K?$
NO — NO
STEP 5
$\frac{D}{2} \geqq K?$

YES
STEP 4
A = 255 - D
B = 255

YES
STEP 6
A = O
B = D

STEP 7
$A = K - \dfrac{D}{2}$

$B = K + \dfrac{D}{2}$

# FIG. 3 (b)

ONE CYCLE

D

WRITING PULSE

A

B

K

D : DENSITY DATA
K : RECORDING POSITION
DATA

# FIG. 4 (a)
### IMAGE CLOCK

# FIG. 4 (b)
### DENSITY DATA

# FIG. 4 (c)
### RECORDING POSITION DATA

# FIG. 4 (d)
### PULSE STARTING DATA

# FIG. 4 (e)
### PULSE ENDING DATA

# FIG. 4 (f)
### TRIGGER PULSE
### t1

# FIG. 4 (g)
### TRIGGER PULSE
### t2

# FIG. 4 (h)
### WRITING PULSE

A

B

t1

t2

EP 0 564 868 A2

# FIG. 5

EP 0 564 868 A2

# FIG. 6

ONE PIXEL

ONE PIXEL

⬚ : RECORDING EXAMPLE BY CONVENTIONAL METHOD

⊠ : RECORDING EXAMPLE BY PRESENT INVENTION

# FIG. 7

## FIG. 8

431C    431B    431A    431

θ

d    d

PRIMARY SCANNING
DIRECTION

## FIG. 9

Sa

Sb'

Sb

Sc

θ

Sc'

δ

2δ

PRIMARY SCANNING
DIRECTION

# FIG. 10 (a)

| | | |
|---|---|---|
| m1 | m2 | m3 |
| m4 | m5 | m6 |
| m7 | m8 | m9 |

# FIG. 10 (b)

m5

| | | |
|---|---|---|
| S1 | S2 | S3 |
| S4 | S5 | S6 |
| S7 | S8 | S9 |

# FIG. 11 (a)

| | | |
|---|---|---|
| m1=226 | m2=251 | m3=8 |
| m4=200 | m5=45 | m6=7 |
| m7=190 | m8=8 | m9=2 |

# FIG. 11 (b)

m5

| | | |
|---|---|---|
| S1=71 | S2=76 | S3=24 |
| S4=65 | S5=32 | S6=24 |
| S7=63 | S8=24 | S9=22 |

# FIG. 12 (a)

# FIG. 12 (b)

▨ : REGION RELATED TO S1
≡ : REGION RELATED TO S2
║ : REGION RELATED TO S3
⧄ : REGION RELATED TO S4

EP 0 564 868 A2

# FIG. 13 (a)

# FIG. 13 (b)

⫽ : REGION RELATED TO S1
≡ : REGION RELATED TO S2
||| : REGION RELATED TO S3
⧅ : REGION RELATED TO S4

34

## FIG. 14

## FIG. 15

# FIG. 16

OUTPUT OF LASER EMISSION

DRIVING CURRENT

# FIG. 17

+1

0

-1

CENTER OF GRAVITY

# FIG. 18

# FIG. 19

H ●

520

D Q ── PWM OUT

IMAGE DATA
TRANSFER
CLOCK

>

RS

TRIGGER

DELAY
PULSE

DATA          OUT

510  PROGRAMABLE DELAY
     GENERATING CIRCUIT

IMAGE DATA ─┤

IMAGE DATA TRANSFER CLOCK

PWM OUT

DELAY PULSE

AMOUNT OF DELAY
CORRESPONDING TO DATA

EP 0 564 868 A2

# FIG. 20

(a) PHOTOGRAPHY PROCESSING

(b) NORMAL PROCESSING

IMAGE DATA

AVERAGE

PWM OUT

IMAGE TRANSFER CLOCK

SELECTOR — 540

2-FREQUENCY DEMULTIPLIER

530

IMAGE DATA

SWITCHING CIRCUIT

550

ONE-PIXEL / TWO-PIXEL SWITCHING SIGNAL (PRINTING CYCLE CONTROL SIGNAL)

ONE-PIXEL DATA

AVERAGE OF 2-PIXEL DATA

H

D Q — PWM OUT
520
RS
DELAY PULSE

TRIGGER

DATA    OUT

510

PROGRAMABLE DELAY GENERATOR

560

FULL SCALE DELAY RANGE SETTING UNIT

EP 0 564 868 A2

FIG. 21

FIG. 22

# FIG. 23

ADJUSTMENT TERMINAL

52

TRIGGER
RESET

TRIGGER CIRCUIT

LAMP CIRCUIT

53

COMPARATOR

54

OUT

D / A

51

DATA

LATCH

50

# FIG. 24

SCANNER 1 ──→ A/D CONVERTER 3a ──→ IMAGE PROCESSOR 3b

2

4 TIMING CONTROLLER

EP 0 564 868 A2

5

SI ←── I/V AMP 13 ←── INDEX SENSOR 12

IMAGE DATA D

IMAGE FORMING SIGNAL GENERATING CIRCUIT 6

8

S ──→ LASER DRIVING CIRCUIT 7 ──→ SEMICONDUCTOR LASER 8

POLYGONAL MIRROR 11

TIMING CIRCUIT 9 ──── ON/OFF CONTROL SIGNAL ────→ MOTOR DRIVING CIRCUIT 10

# FIG. 25

607 PWM SIGNAL GENERATING UNIT

**601**
PRINT-OUT COMMAND UNIT

**602**
FRAME MEMORY

**603**
SCANNER

**605**
REFERENCE CLOCK GENERATING CIRCUIT

**604**
READOUT CIRCUIT

**606**
PHOTOGRAPH / CHARACTER MODE SELECTING UNIT

**608**
DENSITY CHANGE DETECTING CIRCUIT

**609a**
ONE-PIXEL PROCESSING IN CENTRAL PORTION

**609b**
MODULATION PROCESSING FOR RECORDING POSITION AT EDGE PORTION

**609c**
TWO-PIXEL PROCESSING IN CENTRAL PORTION

**610**
SELECTOR

**611**
RASTER SCANNING CIRCUIT

**612**

**402**

**470**

**613**

**441** Y

**442** M

**443** C

**444** BK

DATA 8
CLK

**620**
D / A

**622**
COMPARATOR

**621**

EP 0 564 868 A2

# FIG. 26

PWM AREA FOR RECORDING POSITION MODULATION (B)

PWM AREA FOR ONE PIXEL (A)

ONE PIXEL WIDTH

ONE PIXEL WIDTH

CHARACTER RECORDING AREA

SECONDARY SCANNING DIRECTION

PHOTOGRAPHY IMAGE RECORDING AREA

PWM AREA FOR 2-PIXEL (C)

PRIMARY SCANNING DIRECTION

PWM AREA FOR RECORDING POSITION MODULATION (D)

─ ─ ─ : IMAGE FORMATION POSITION WHEN MODULATION OF RECORDING POSITION IS NOT CONDUCTED

# FIG. 27

EP 0 564 868 A2

# FIG. 28

DCK
<u>220</u> OUTPUT
DCK
X1
X2
D1
D1'
D2
D2'

241 INNER TIMING

241 OUTPUT (S0,S1)
230 DATA INCORPORATION TIMING
230 DELAY OUTPUT
D / A OUTPUT
φT1
φT2
φT3
φ2
φ1

EP 0 564 868 A2

# FIG. 29

# FIG. 30

(1) →  WHEN NORMAL PULSE WIDTH MODULATION IS USED

(2) →  WHEN PRESENT METHOD IS USED

| | 0 | 1 | 2 | 3 | 4 | 5 | 6 |

BLACK

WHITE

← IMAGE DATA

| |(2-0)|(3-1)|(4-2)|(5-3)|(6-4)|(7-5)|

| S0 | 1 | 1 | 0 | 0 | 0 | 0 |
| S1 | 0 | 0 | 0 | 1 | 1 | 0 |

ARITHMETIC RESULT OF S0 AND S1

# FIG. 31

DCK

220 OUTPUT

$\overline{DCK}$

X1
X2
D1
D2
} 241 INNER TIMING

241 OUTPUT

230 DELAY OUTPUT

D / A OUTPUT

φ T 10

φ T 3

φ T 2

φ 2

φ 1

# FIG. 32

|  | 0 | 1 | 2 | 3 | 4 | 5 | 6 | 7 |
|---|---|---|---|---|---|---|---|---|

BLACK

WHITE

(1-0) (2-1) (3-2) (4-3) (5-4) (6-5) (7-6)

| | (1-0) | (2-1) | (3-2) | (4-3) | (5-4) | (6-5) | (7-6) | |
|---|---|---|---|---|---|---|---|---|
| S0 | 0 | 1 | 1 | 0 | 0 | 0 | 0 | -- |
| S1 | 0 | 0 | 0 | 1 | 1 | 0 | 0 | -- |

FIG. 33 (a)

IMAGE DATA $\xrightarrow{8}$ → [D / A] → ANALOG OUTPUT

$\overline{DCK}$ →

FIG. 33 (b)

IMAGE DATA

$\overline{DCK}$

WHITE
(255)

ANALOG
OUTPUT

BLACK
(0)

## FIG. 34 (a)

R2

C

CLOCK  R1

−

+

E

TRIANGULAR
WAVE
OUTPUT

## FIG. 34 (b)

CLOCK

TRIANGULAR
WAVE
OUTPUT

# FIG. 35 (a)

260C OUTPUT
φ1

260B OUTPUT
φ2

PWM2

PWM3

# FIG. 35 (b)

DCK

φ1

φ2

φT2
(260B)

φT3
(260C)

2ND
IMAGE
SIGNAL

| 260C | 260B | 260C | 260B |

3RD
IMAGE
SIGNAL

| 260B | 260C | 260B | 260C |

FIG. 36

RASTER SCANNING CIRCUIT 300

SELECTING CIRCUIT 250

SWITCHING CIRCUIT 270

268

265 DELAY

264A 1ST. CHOPPING WAVE

264B 2ND. CHOPPING WAVE

264C 3RD. CHOPPING WAVE

266 DELAY

φ1
φ2
$\overline{DCK}$

283

281

220 READOUT CIRCUIT

ARITHMETIC PROCESSING CIRCUIT 241

DELAY CIRCUIT A 230

274 MTF CORRECTION

273 γ CONVERSION

D / A 267

280 REFERENCE CLOCK GENERATING CIRCUIT

DCK

140 INTERPOLATION DATA GENERATING CIRCUIT

210 IMAGE DENSITY DATA MEMORY CIRCUIT

154 MASKING UCR

153 DENSITY CONVERTER

152 A / D

151 COLOR SCANNER

100

130 FONT DATA MEMORY CIRCUIT

120 FONT DATA GENERATING CIRCUIT

110 INPUT CIRCUIT

# FIG. 37

(1) IMAGE DATA (DIGITAL)

(2) REFERENCE CLOCK

WHITE(DENSITY DATA : LOW)
(3) D / A CONVERTER OUTPUT
BLACK(DENSITY DATA : HIGH)

(4) REFERENCE WAVE

(5) COMPARATOR OUTPUT
(MODULATING SIGNAL)

(6) LATENT IMAGE FORMED ON
PHOTORECEPTOR

A    B    C    D    E

EP 0 564 868 A2